# EUROPEAN PATENT APPLICATION

(11) **EP 2 783 976 A1**
(43) Date of publication of application: **01.10.2014**
(21) Application number: 12851246.4
(22) Date of filing: 01.05.2012
(51) Int. Cl.: B63B 25/16

(54) **JOINT FOR DISSIMILAR MATERIALS, STRUCTURE-SUPPORTING MEMBER, LNG CARRIER, AND METHOD FOR MANUFACTURING JOINT FOR DISSIMILAR MATERIALS**

(30) Priority: 22.11.2011 WO PCT/JP2011/006508
(71) Applicant: Kawasaki Jukogyo Kabushiki Kaisha, Kobe-shi, Hyogo 650-8670 (JP)
(72) Inventor: TAKAOKA, Yukichi, Hyogo 650-8670 (JP); KIYOSUE, Takaaki, Hyogo 650-8670 (JP); FUJIMOTO, Mitsuo, Hyogo 650-8670 (JP); NISHIDA, Hidehito, Hyogo 650-8670 (JP); YOSHIDA, Takumi, Hyogo 650-8670 (JP); MITANI, Noriko, Hyogo 650-8670 (JP)
(74) Representative: Leinweber & Zimmermann
(86) International application number: PCT/JP2012/002948
(87) International publication number: WO 2013/076884

(57) **Abstract**

A dissimilar material joint (10), which is applied to a structure support member (5) supporting a structure (4) fabricated from a metal dissimilar to a metal of a hull (2), includes: a first joint member (11) joined to a hull-side member (6); and a second joint member (12) fillet-welded to a structure-side member (7) and friction stir welded to the first joint member (11). A first joint surface (14) of the first joint member (11) and a second joint surface (15) of the second joint member (12) are formed as substantially flat surfaces and are in surface contact with each other. The two joint members (11, 12) are joined together at a plurality of friction stir welds (21), the friction stir welds (21) being arranged in a width direction and extending in a longitudinal direction. A pair of fillet welds (23) is formed in side surfaces (20) of the structure-side member (7), the fillet welds (23) reaching a welding surface (16) opposite to the second joint surface (15). Each fillet weld (23) is disposed such that each fillet weld (23) overlaps at least one of the friction stir welds (21) when seen in a normal direction to the second joint surface (15).

## Description

### Technical Field

The present invention relates to: an LNG carrier including a liquefied natural gas storage tank that is fabricated from a metal dissimilar to that of a hull; a structure support member interposed between the hull and a structure, the structure being fabricated from a metal dissimilar to that of the hull, the structure support member supporting the structure; and a dissimilar material joint applied to the structure support member. The present invention also relates to a method of manufacturing the dissimilar material joint.

### Background Art

LNG carriers are ships for transporting liquefied natural gas, and include a tank for storing the liquefied natural gas under a temperature kept to an extremely low temperature. Tanks of such LNG carriers are roughly categorized into membrane-type tanks and independent-type tanks. In the case of adopting an independent-type tank, a tank support member is welded to an inner wall of a hold, and the tank is supported by the tank support member in the hold.

Independent-type tanks are formed in a spherical, cylindrical, or square shape. In the case of adopting a spherical tank, the tank support member is formed to be cylindrical or in the shape of a circular truncated cone. The tank support member extends upward from the inner wall of the hold, and the outer surface of the equator portion of the tank is joined to the upper end of the tank support member. It should be noted that such a tank support member for use in supporting an independent-type spherical tank is referred to as a "skirt" based on its shape.

Generally speaking, the hull of an LNG carrier is manufactured from steel, and an independent-type tank is manufactured from an aluminum alloy so that the tank can bear an extremely low temperature. A tank support member is interposed between these metal materials dissimilar to each other. Since steel and an aluminum alloy have different melting points from each other, steel is not easily welded to the aluminum alloy. In view of this, the tank support member includes: a hull-side member fabricated from the same kind of metal as that of the hull, the hull-side member being fixed to the hull; and a tank-side member fabricated from the same kind of metal as that of the tank, the tank-side member being fixed to the tank. A dissimilar material joint called a transition joint (TJ) is applied to the tank support member in order to connect the hull-side member and the tank-side member together.

Patent Literature 1 discloses a dissimilar material joint including a first joint member to be fillet welded to a hull-side member and a second joint member to be fillet welded to a tank-side member. The first joint member is fabricated from the same kind of metal as that of the hull-side member, and the second joint member is fabricated from the same kind of metal as that of the tank-side member. The dissimilar material joint is formed by joining the first joint member to the second joint member.

Patent Literature 1 discloses adopting explosive welding, vacuum rolling, or a dovetail joint in order to join the two joint members together, which are not easily welded together. It should be noted that since the dissimilar material joint is very large in size, Patent Literature 1 discloses manufacturing the dissimilar material joint in the following manner: a plurality of circumferentially (longitudinally) divided segments are manufactured, and then the plurality of segments are connected to one another sequentially.

### Citation List

### Patent Literature

PTL 1: Japanese Laid-Open Patent Application Publication No. 2004-74870

### Summary of Invention

### Technical Problem

However, in a case where explosive welding is used, titanium cladding and nickel cladding need to be interposed between the first joint member and the second joint member. This results in a high manufacturing cost. Moreover, since the dimensions of each segment are restricted by the dimensions of explosive forming equipment, it is difficult to manufacture elongated segments. Therefore, the number of segments of the dissimilar material joint becomes significantly large. As a result, the process of manufacturing the dissimilar material joint becomes cumbersome and complicated, and significant man-hours are required in order to assemble the segments into the dissimilar material joint. Also in the case of using vacuum rolling, the dimensions of each segment are restricted by the dimensions of an apparatus such as a vacuum chamber. Thus, the same problem as in the case of the explosive welding arises.

In a case where a dovetail joint is used, the first joint member and the second joint member are arranged in the extending direction of dovetail grooves, and then the first joint member is moved relative to the second joint member in the extending direction of the dovetail grooves so that a dovetail joint will be formed. However, the extending direction of the dovetail grooves coincides with the width direction of the first joint member and the second joint member (i.e., coincides with the radial direction of the tank support member). Therefore, if it is attempted to reduce the backlash of the dovetail joint in order to obtain the reliability of the joint, then it is necessary to reduce the size of each segment. Thus, the same problem as in the case of the explosive welding arises.

As disclosed in Patent Literature 1, if fillet welding is adopted for joining the dissimilar material joint to the hull-side member and the tank-side member, then the manufacturing process of the dissimilar material joint is simplified and quality control becomes relatively easy. However, if the dissimilar material joint is applied to a ship, then inertial force based on acceleration due to ship hull motion (e.g., pitching, yawing, rolling, and heaving) and inertial force based on acceleration due to wave-exciting force are exerted on the dissimilar material joint. Moreover, if the dissimilar material joint is applied to the tank support member, then the weight of the tank, the weight of LNG in the tank, and a load based on thermal deformation of the tank are exerted on the dissimilar material joint.

When the tank-side member is fillet welded to the second joint member, a pair of fillet welds is formed between the tank-side member and the second joint member. However, between the pair of fillet welds, the lower end of the tank-side member is not joined to the second joint member. Accordingly, stress concentration tends to occur at the pair of fillet welds based on loads due to, for example, vertical compression and stretching, shear in the longitudinal direction and the width direction (thickness direction of the hull-side member), and bending toward the center of the tank. However, Patent Literature 1 does not disclose any measures against such stress concentration. For example, a dissimilar material joint using a dovetail joint technique is such that, when seen in plan view, a fillet weld is disposed away from a dovetail joint. Accordingly, when a vertical tensile load is exerted on the tank support member, a flow of the load is bent in a complex manner between the fillet weld and the dovetail joint. As a result, excessive stress concentration occurs at the fillet weld.

Other than the tanks of LNG carriers, the superstructure of a ship, for example, a structure for forming a residential area, is sometimes fabricated from an aluminum alloy. Also in the case of applying a dissimilar material joint to a support member for supporting such a superstructure, the above-described problems occur.

In view of the above, an object of the present invention is to make it possible to readily manufacture a dissimilar material joint to be applied to a structure support member for supporting a structure, the structure being fabricated from a metal dissimilar to that of a hull, and to alleviate stress concentration at a fillet weld.

### Solution to Problem

In order to achieve the above object, a dissimilar material joint according to the present invention is a dissimilar material joint applied to a structure support member interposed between a hull and a structure, the structure being fabricated from a metal dissimilar to a metal of the hull, the structure support member supporting the structure. The dissimilar material joint includes: a first joint member fabricated from a same kind of metal as the metal of the hull and joined to a hull-side member of the structure support member; and a second joint member fabricated from a same kind of metal as the metal of the structure, the second joint member being fillet welded to a structure-side member of the structure support member and friction stir welded to the first joint member. The first joint member includes a first joint surface opposite to the hull-side member, and the second joint member includes a welding surface fillet welded to the structure-side member and a second joint surface opposite to the welding surface. The first joint surface and the second joint surface are formed as substantially flat surfaces and are in surface contact with each other. The first joint member and the second joint member are joined together at a plurality of friction stir welds, the friction stir welds being arranged in a width direction and extending in a longitudinal direction. A pair of fillet welds is formed in side surfaces of the structure-side member, the fillet welds reaching the welding surface. The pair of fillet welds is disposed such that each fillet weld overlaps at least one of the plurality of friction stir welds when seen in a normal direction to the second joint surface.

According to the above configuration, the first joint member is friction stir welded to the second joint member in a state where the substantially flat first joint surface and second joint surface are in surface contact with each other. Therefore, the second joint member can be combined with the first joint member more easily compared to cases where fitting of protrusions into grooves, for example, a dovetail joint, is adopted. The friction stir welds can be readily made elongated, only requiring a welding robot holding a welding tool to run or a welding truck holding a welding tool to be conveyed. Therefore, unlike explosive welding and vacuum rolling, no technical problem in terms of joining technology requires the length of each segment of the dissimilar material joint to be short. Accordingly, the number of segments forming the dissimilar material joint can be reduced, which makes it possible to simplify the manufacturing process of the dissimilar material joint, and consequently simplify the manufacturing process of the structure support member and reduce the manufacturing cost.

The plurality of friction stir welds are arranged in the width direction of the dissimilar material joint. Accordingly, the strength of the dissimilar material joint against shear loads exerted in the longitudinal and width directions onto the first and second joint members is improved. Moreover, the strength of the dissimilar material joint against compressive and tensile loads exerted in the normal direction to the second joint surface onto the first and second joint members is improved.

Since the second joint member is fabricated from the same kind of metal as the metal of the structure, the second joint member is readily fillet-welded to the structure-side member. The pair of fillet welds is formed in the side surfaces of the structure-side member such that the fillet welds reach the welding surface of the second joint member. The pair of fillet welds is disposed such that each fillet weld overlaps at least one of the plurality of friction stir welds when seen in the normal direction to the second joint surface. Accordingly, when compressive and tensile loads in the normal direction to the second joint surface are exerted, the loads smoothly flow in the normal direction in the fillet welds. Thus, stress concentration at the fillet welds can be favorably alleviated.

One or more friction stir welds among the plurality of friction stir welds, the one or more friction stir welds being positioned between outermost friction stir welds of the plurality of friction stir welds, may be disposed between the pair of fillet welds when seen in the normal direction.

According to the above configuration, even though the first joint member and the second joint member are joined together such that their substantially flat surfaces are butted together, sufficient joining strength can be obtained owing to the friction stir weld(s) positioned between the outermost friction stir welds.

At least two friction stir welds among the plurality of friction stir welds may form a continuous portion, in which the at least two friction stir welds are continuous with each other in the width direction, and each of the pair of fillet welds may be disposed to overlap the continuous portion when seen in the normal direction.

According to the above configuration, in the continuous portion, an area where the two joint members are vertically joined together can be widely formed in the width direction. Since each fillet weld overlaps such an area, stress concentration at the fillet welds can be favorably alleviated.

The structure-side member may have a pair of grooves formed in the respective side surfaces of the structure-side member. The fillet welds may be formed in the grooves, respectively. The side surfaces of the structure-side member may be disposed such that each of the side surfaces overlaps one of the plurality of friction stir welds when seen in the normal direction.

According to the above configuration, the fillet welds are formed in the grooves. As a result, joining strength at the fillet welds is improved. The side surfaces of the structure-side member are disposed such that each of the side surfaces overlaps one of the plurality of friction stir welds when seen in the normal direction. Accordingly, part of the fillet welds, the part being formed in the grooves, serves to increase an area where the fillet welds overlap the friction stir welds in the normal direction. This makes it possible to alleviate stress concentration at the part of the fillet welds, the part being formed in the grooves.

The second joint member may include: a flat plate portion including the first joint surface and the welding surface; and a pair of protruding portions protruding from both ends of the flat plate portion in the width direction, such that the protruding portions cover both side surfaces of the first joint member, respectively. The flat plate portion may be joined to the first joint member at the plurality of friction stir welds.

According to the above configuration, both side surfaces of the first joint member are covered by the pair of protruding portions. As a result, the strength of the dissimilar material joint against a shear load exerted in the width direction onto the first and second joint members is improved. Since the pair of protruding portions is thus formed, improvement in the rigidity of the second joint member owing to a rib effect can be expected. Accordingly, at the time of performing friction stir welding and fillet welding, a warp of the second joint member in the width direction or longitudinal direction is suppressed, which makes it possible to suppress the second joint surface from being separated from the first joint surface.

The protruding portions may be friction stir welded to the first joint member.

According to the above configuration, the protruding portions are joined to the first joint member. Accordingly, at the time of friction stir welding the flat plate portion to the first joint member and fillet welding the structure-side member to the second joint member, a warp of the flat plate portion in the longitudinal direction as well as a warp of the flat plate portion in the width direction due to heat can be suppressed. Moreover, the joining strength between the first joint member and the second joint member is improved.

The second joint member may include a pair of turned portions protruding from distal ends of the pair of protruding portions, such that the turned portions cover a surface of the first joint member, the surface being an opposite surface to the first joint surface.

According to the above configuration, the first joint member is sandwiched, in the normal direction to the second joint surface, by the flat plate portion and the turned portions. Accordingly, at the time of friction stir welding the flat plate portion to the first joint member and at the time of performing fillet welding, the turned portions exert an anchor effect in cooperation with the first joint member. Accordingly, a warp of the flat plate portion in the longitudinal direction as well as a warp of the flat plate portion in the width direction due to heat can be suppressed. Moreover, the strength of the dissimilar material joint against compressive and tensile loads exerted in the normal direction onto the first and second joint members is improved.

The turned portions may be friction stir welded to the first joint member.

According to the above configuration, the joining strength between the first joint member and the second joint member is improved, and also, a warp suppressing effect is improved.

The second joint member may include a first half body and a second half body divided in the width direction, the first half body and the second half body being joined together to form the second joint member.

According to the above configuration, by moving the first half body in the width direction relative to the first joint member and moving the second half body in the width direction relative to the first joint member, a structure in which the first joint member is sandwiched between the flat plate portion and the pair of turned portions can be readily realized.

The first half body and the second half body may be joined together by friction stir welding.

According to the above configuration, the first half body and the second half body are joined together at the same time as the friction stir welding is performed. Therefore, even though the second joint member is constituted by two components, the manufacturing process does not become cumbersome and complicated.

The first half body and the second half body may be joined together by arc welding.

According to the above configuration, even if the first half body and the second half body contract when the first half body and the second half body are each friction stir welded to the first joint member, causing a gap to be formed at a parting line between the first and second half bodies, the formed gap can be readily eliminated by adjusting the amount of welding material to be fed, and thereby the joint reliability between the first half body and the second half body is improved.

One side of each friction stir weld, the one side being closer to a center of the first joint surface in the width direction than an opposite side of the friction stir weld, may be an advancing side, and the opposite side may be a retreating side.

According to the above configuration, the strength of the dissimilar material joint against tensile and shear loads exerted in the outward width direction onto the dissimilar material joint can be improved.

A structure support member according to the present invention is a structure support member interposed between a hull and a structure, the structure being fabricated from a metal dissimilar to a metal of the hull, the structure support member supporting the structure. The structure support member includes: a hull-side member fabricated from a same kind of metal as the metal of the hull and fixed to the hull; a structure-side member fabricated from a same kind of metal as the metal of the structure and fixed to the structure; and the above-described dissimilar material joint. An LNG carrier according to the present invention includes: a hull; a tank fabricated from a metal dissimilar to a metal of the hull; and the above-described structure support member as a tank support member.

A dissimilar material joint manufacturing method according to the present invention is a method of manufacturing a dissimilar material joint applied to a structure support member interposed between a hull and a structure, the structure being fabricated from a metal dissimilar to a metal of the hull, the structure support member supporting the structure. The method includes: a first joint member fabricating step of fabricating a first joint member from a same kind of metal as the metal of the hull, the first joint member including a substantially flat first joint surface; a second joint member fabricating step of fabricating a second joint member from a same kind of metal as the metal of the structure, the second joint member including a substantially flat second joint surface and a welding surface opposite to the second joint surface; a friction stir welding step of friction stir welding the first joint member and the second joint member together at a plurality of friction stir welds which are arranged in a width direction and which extend in a longitudinal direction, the plurality of friction stir welds being formed by performing an operation a plurality of times at different respective positions in the width direction, the operation including, in a state where the first joint surface and the second joint surface are in surface contact with each other, pushing a tool against the welding surface until the tool reaches the first joint surface and then moving the tool in the longitudinal direction while keeping the tool rotating; and a fillet welding step of fillet welding the structure-side member to the second joint member such that a pair of fillet welds, which is formed in side surfaces of the structure-side member of the structure support member and which reaches the welding surface, is disposed to overlap at least one of the plurality of friction stir welds.

According to the above method, the number of segments forming the dissimilar material joint can be reduced, and the manufacturing process of the dissimilar material joint is simplified. Consequently, the manufacturing process of the structure support member is simplified and the manufacturing cost is reduced. Moreover, the strength of the dissimilar material joint against shear loads exerted in the longitudinal and width directions onto the first and second joint members is improved. Furthermore, the strength of the dissimilar material joint against compressive and tensile loads exerted in the direction normal to the second joint surface onto the first and second joint members is improved. When compressive and tensile loads in the normal direction to the second joint surface are exerted, the loads smoothly flow in the normal direction in the fillet welds. Thus, stress concentration at the fillet welds can be favorably alleviated.

The second joint member fabricating step may include fabricating a first half body and a second half body, which are half bodies of the second joint member divided in the width direction, the first half body and the second half body each including: a flat plate half portion including a half of the second joint surface and a half of the welding surface at one side in the width direction; and a protruding portion protruding from an end of the flat plate half portion. The friction stir welding step may include: a first combining step of combining the first half body with the first joint member, by moving the first half body in the width direction relative to the first joint member to cover the first joint surface with the flat plate half portion of the first half body in such a manner as to cover a side surface of the first joint member with the protruding portion; a first friction stir welding step of friction stir welding the first joint member and the first half body together at a plurality of friction stir welds which are arranged in the width direction and which extend in the longitudinal direction, the plurality of friction stir welds being formed by pushing a tool against the welding surface of the first half body until the tool reaches the first joint surface and then moving the tool in the longitudinal direction while keeping the tool rotating; a second combining step of combining the second half body with the first joint member, by moving the second half body in the width direction relative to the first joint member to cover the first joint surface with the flat plate half portion of the second half body in such a manner as to cover a side surface of the first joint member with the protruding portion; a second friction stir welding step of friction stir welding the first joint member and the second half body together at a plurality of friction stir welds which are arranged in the width direction and which extend in the longitudinal direction, the plurality of friction stir welds being formed by pushing the tool against the welding surface of the first half body until the tool reaches the first joint surface and then moving the tool in the longitudinal direction while keeping the tool rotating; and a half body joining step of joining the first half body and the second half body together along a parting line between the first half body and the second half body.

According to the above method, in a case where the second joint member includes a pair of protruding portions, the first half body and the second half body, which are divided in advance in the width direction, are fabricated. If the second joint member is formed from a single component, then in order to combine the first joint member with the second joint member, the first joint member and the second joint member are arranged in a line in the longitudinal direction in advance, and then the first joint member is moved in the longitudinal direction relative to the second joint member. In this case, in the equipment for manufacturing the dissimilar material joint, the dimension of a section for joining the first joint member to the second joint member needs to be twice or more as great as the length of each segment of the dissimilar material joint. In other words, the length of each segment needs to be reduced in accordance with the section. In this respect, in the present embodiment, the second joint member is formed by joining the pair of half bodies together, which are divided in the width direction. Accordingly, the first half body and the second half body may be set in advance such that they are placed adjacent to the first joint member in the width direction. Therefore, the length of each segment of the dissimilar material joint can be made great as much as possible. The above-described manufacturing method is useful particularly in the case of manufacturing a dissimilar material joint that is large in the width direction and the longitudinal direction.

The half body joining step may include moving the tool along the parting line between the first half body and the second half body, such that the second half body is friction stir welded to the first joint member and integrated with the first half body.

According to the above method, one of the plurality of friction stir welds is utilized to integrate the first and second half bodies together. Thus, even though the second joint member is constituted by the two half bodies, these half bodies are integrated together at the same time as the second joint member is joined to the first joint member. Therefore, the manufacturing process of the dissimilar material joint does not become cumbersome and complicated.

### Advantageous Effects of Invention

The present invention makes it possible to readily manufacture a dissimilar material joint to be applied to a structure support member, and favorably alleviate stress concentration at a fillet weld. The above and further objects, features, and advantages of the present invention will more fully be apparent from the following detailed description of embodiments with accompanying drawings.

### Brief Description of Drawings

[Fig. 1] Fig. 1 is a partially cutaway perspective view showing an LNG carrier in which a dissimilar material joint according to one embodiment of the present invention is applied.
[Fig. 2] Fig. 2 is a partial sectional view showing an internal structure of the LNG carrier 1 shown in Fig. 1.
[Fig. 3] Fig. 3 is a sectional view showing a dissimilar material joint according to Embodiment 1 of the present invention.
[Fig. 4A] Fig. 4A is an exploded perspective view of the dissimilar material joint shown in Fig. 3.
[Fig. 4B] Fig. 4B is a perspective view showing a state where a first joint member shown in Fig. 4A is joined to a second joint member.
[Fig. 4C] Fig. 4C is a perspective view showing a state where a hull-side member is joined to the first joint member shown in Fig. 4B.
[Fig. 4D] Fig. 4D is a perspective view showing a state where a tank-side member is joined to the second joint member shown in Fig. 4C.
[Fig. 4E] Fig. 4E is a perspective view illustrating a positional relationship between an advancing side and a retreating side of each friction stir weld shown in Fig. 4C.
[Fig. 5] Fig. 5 is a sectional view showing a dissimilar material joint according to Embodiment 2 of the present invention.
[Fig. 6] Fig. 6 is a sectional view showing a dissimilar material joint according to Embodiment 3 of the present invention.
[Fig. 7A] Fig. 7A is an exploded perspective view of the dissimilar material joint shown in Fig. 6.
[Fig. 7B] Fig. 7B is a perspective view showing a state where a first half body shown in Fig. 7A is joined to a first joint member.
[Fig. 7C] Fig. 7C is a perspective view showing a state where a second half body shown in Fig. 7B is joined to the first joint member and the first half body.
[Fig. 8] Fig. 8 is a sectional view showing a dissimilar material joint according to Embodiment 4 of the present invention.
[Fig. 9] Fig. 9 is a sectional view showing a dissimilar material joint according to Embodiment 5 of the present invention.
[Fig. 10A] Fig. 10A is an exploded perspective view of the dissimilar material joint shown in Fig. 9.
[Fig. 10B] Fig. 10B is a perspective view showing a state where a first half body shown in Fig. 10A is joined to a first joint member.
[Fig. 10C] Fig. 10C is a perspective view showing a state where a second half body shown in Fig. 10B is joined to the first joint member.
[Fig. 11] Fig. 11 is a sectional view showing a dissimilar material joint according to a variation of Embodiment 5 of the present invention.

### Description of Embodiments

Hereinafter, embodiments of the present invention will be described with reference to the drawings. In the drawings, the same or corresponding elements are denoted by the same reference signs, and repeating the same detailed descriptions is avoided. The description below describes a liquefied natural gas storage tank as one example of a structure fabricated from a metal dissimilar to that of a hull.

### [Embodiment 1]

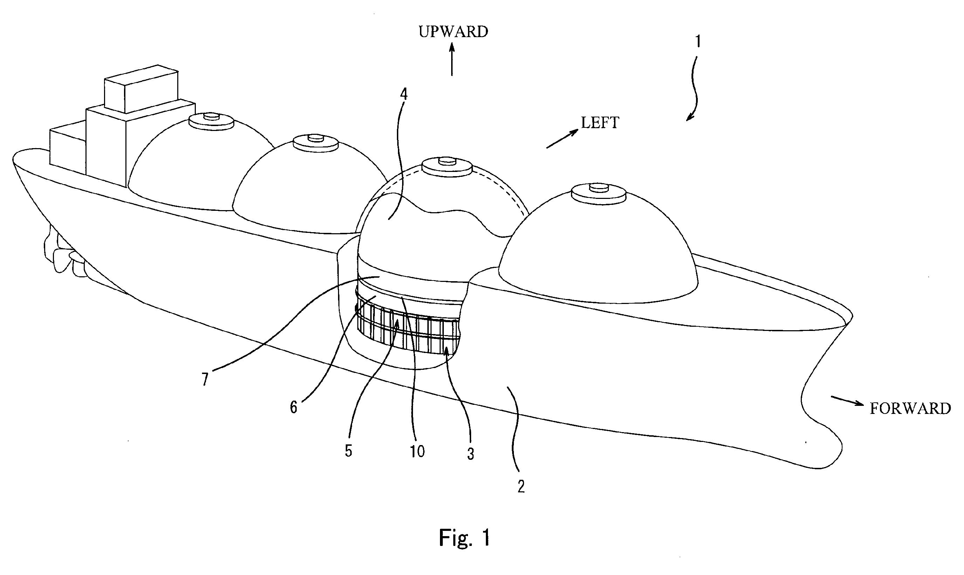

Fig. 1 is a partially cutaway perspective view showing an LNG carrier 1 according to one embodiment of the present invention. The LNG carrier 1 is a ship for transporting liquefied natural gas (LNG) of an extremely low temperature (e.g., -163 °C). The LNG carrier 1 includes: a hull 2 including a hold 3; and a plurality of tanks 4 storing LNG under a temperature kept to an extremely low temperature. The tanks 4 are accommodated in the hold 3, and are arranged in the front-rear direction of the hull 2. In the present embodiment, each tank 4 is of a so-called independent type, and is supported by a tank support member 5 (which will hereinafter be referred to as a "skirt"). The tank 4 is formed in a spherical shape. The skirt 5 is formed in a cylindrical shape, the axis of which extends vertically. The lower end of the skirt 5 is connected to the hull 2 (e.g., to the bottom wall of the hold), and the upper end of the skirt 5 is connected to the tank 4.

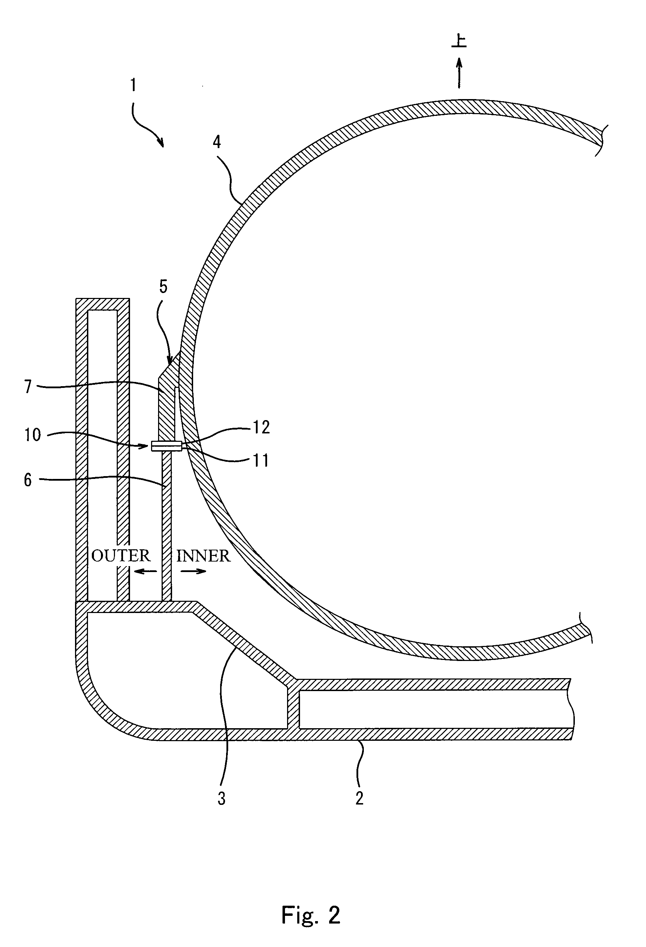

Fig. 2 is a partial sectional view showing an internal structure of the LNG carrier 1 shown in Fig. 1. As shown in Fig. 2, the skirt 5 includes: a hull-side member 6 connected to the hull 2; and a tank-side member 7 connected to the tank 4. The hull-side member 6 and the tank-side member 7 are both formed in a cylindrical shape. The lower end of the hull-side member 6 is connected to the hull 2, and the hull-side member 6 extends upward from the hull 2. The lower end of the tank-side member 7 is connected to the upper end of the hull-side member 6, and the tank-side member 7 extends upward from the hull-side member 6. The upper end of the tank-side member 7 is connected to the outer surface of the equator portion of the tank 4.

Similar to the hull 2, the hull-side member 6 is fabricated from steel. Similar to the tank 4, the tank-side member 7 is fabricated from an aluminum alloy. In order to vertically connect these two components 6 and 7 together, which are fabricated from different metals, respectively, a dissimilar material joint 10 is applied to the skirt 5. The dissimilar material joint 10 is interposed between the upper end of the hull-side member 6 and the lower end of the tank-side member 7. In the present embodiment, since the skirt 5 is cylindrical, the dissimilar material joint 10 is formed in the shape of a ring when seen in plan view, accordingly.

In the description below, in the thickness direction of each of the skirt 5, the hull-side member 6, and the tank-side member 7, the side where the axes of the skirt 5 and the tank 4 are disposed may be referred to as an "inner side", and the opposite side thereto may be referred to as an "outer side". The "thickness direction" coincides with the radial direction of the skirt 5, and coincides with the width direction of the dissimilar material joint 10. When seen in plan view, the extending direction of each of the skirt 5, the hull-side member 6, the tank-side member 7, and the dissimilar material joint 10 may be referred to as a "circumferential direction" or "longitudinal direction".

Since the diameter of the skirt 5 is significantly great (e.g., 40 to 50 m), the hull-side member 6 is formed by sequentially connecting a plurality of circumferentially-divided segments, and thereby the hull-side member 6 is formed in a cylindrical shape (i.e., ring-shaped when seen in plan view). Every pair of adjacent segments may be welded together, or may be connected together by bolts or rivets. The same is true of the tank-side member 7 and the dissimilar material joint 10, which form the skirt 5 together with the hull-side member 6.

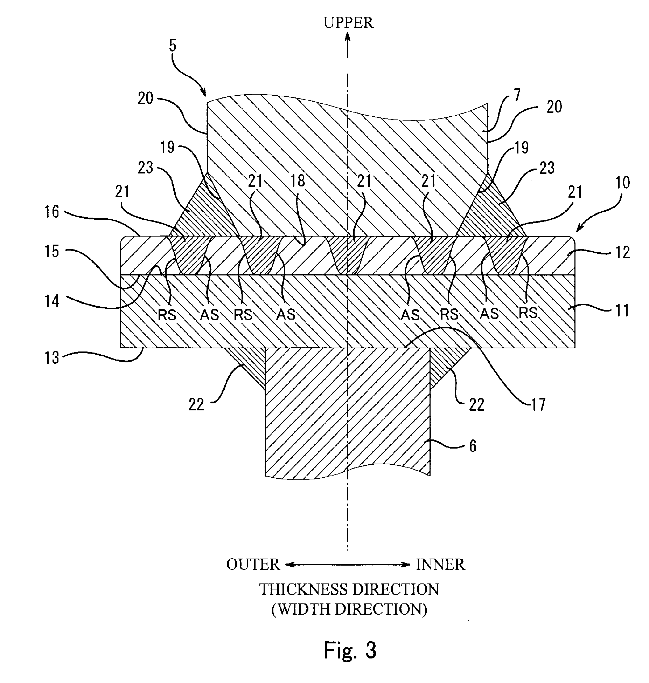

Fig. 3 is a sectional view showing the dissimilar material joint 10 according to Embodiment 1 of the present invention. As shown in Fig. 3, the dissimilar material joint 10 includes a first joint member 11 and a second joint member 12. The first joint member 11 is fabricated from the same kind of metal as that of the hull 2 (see Fig. 2) and the hull-side member 6 (i.e., fabricated from steel). The second joint member 12 is fabricated from the same kind of metal as that of the tank 4 (see Fig. 2) and the tank-side member 7 (i.e., fabricated from the aluminum alloy). However, the first joint member 11 need not be fabricated from the completely same material as that of the hull 2 and the hull-side member 6. The same is true of the second joint member 12. It should be noted that an austenitic stainless steel is suitably applied to the first joint member 11 in consideration of low-temperature toughness, weldability, and the like, and an Al-Mn based alloy (3000 series) or an Al-Mg based alloy (5000 series) is suitably applied to the second joint member 12 in consideration of workability, corrosion resistance, strength, weldability, and the like. The first joint member 11 is fillet welded to the hull-side member 6. The second joint member 12 is fillet welded to the tank-side member 7, and also friction stir welded to the first joint member 11.

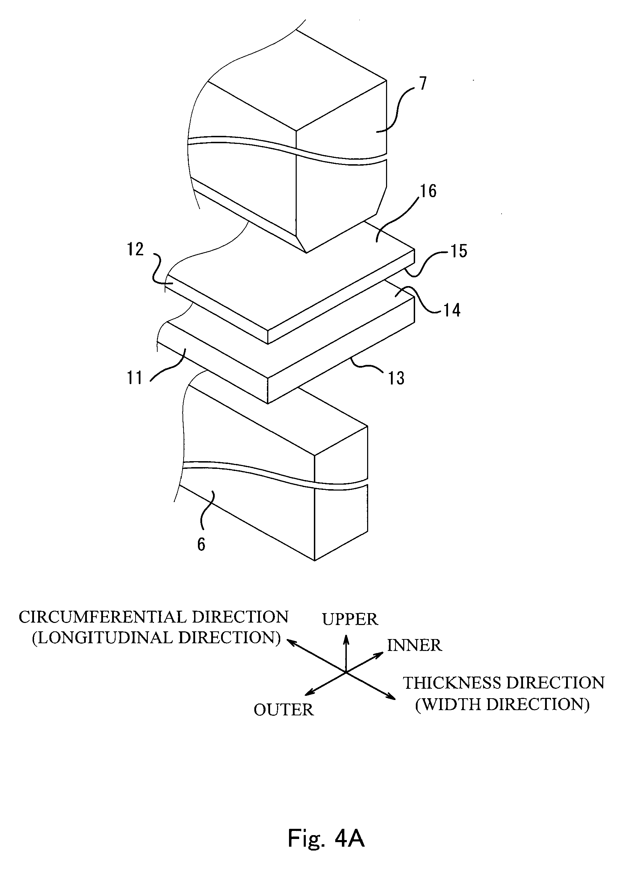

Fig. 4A is an exploded perspective view of the dissimilar material joint 10 shown in Fig. 3. As shown in Fig. 4A, the first joint member 11 is formed in the shape of a flat plate. In the present embodiment, the second joint member 12 is substantially entirely formed in the shape of a flat plate (please refer to Embodiments 2 to 5 to see second joint members 12 formed otherwise). The first joint member 11 includes: a lower surface 13 joined to an upper surface 17 of the hull-side member 6; and a first joint surface 14 opposite to the hull-side member 6 and the lower surface 13. The lower surface 13 and the first joint surface 14 are substantially flat, and extend parallel to each other horizontally. The second joint member 12 includes: a welding surface 16 joined to the tank-side member 7; and a second joint surface 15 opposite to the welding surface 16. The second joint surface 15 and the welding surface 16 are also substantially flat, and extend parallel to each other horizontally. The first joint surface 14 faces upward, and the second joint surface 15 faces downward. The first joint surface 14 and the second joint surface 15 have substantially the same dimensions when seen in plan view.

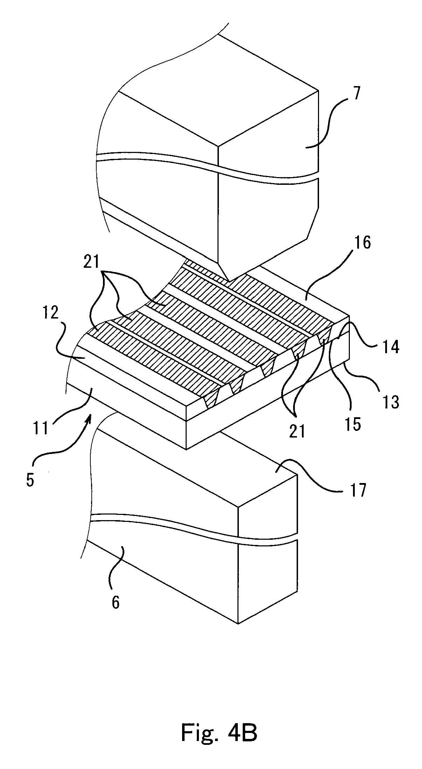

Fig. 4B is a perspective view showing a state where the first joint member 11 shown in Fig. 4A is joined to the second joint member 12. As shown in Fig. 4B, the first joint surface 14 and the second joint surface 15 are vertically stacked one above the other, such that the first joint surface 14 is in surface contact with the second joint surface 15 without being displaced from the second joint surface 15 in the front-rear and left-right directions. Since the first joint surface 14 and the second joint surface 15 are arranged to extend horizontally, the normal line to the first joint surface 14 and the normal line to the second joint surface 15 extend vertically. After stacking the two joint members 11 and 12 in this manner, the first joint member 11 and the second joint member 12 are joined together by friction stir welding.

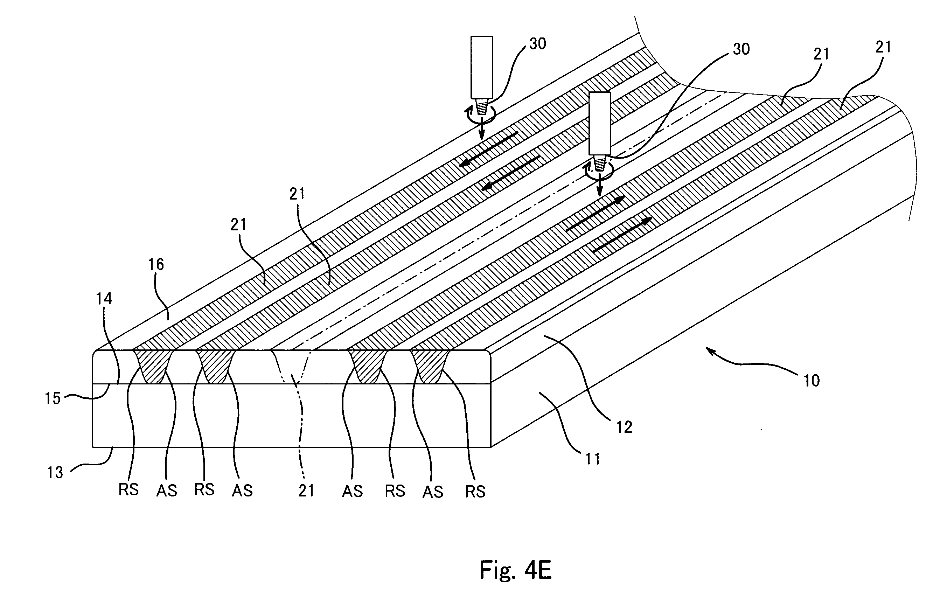

A tool whose distal end is rotatable at a high speed (see Fig. 4E) is used for the friction stir welding. First, the tool with its distal end being rotating is pushed against the welding surface 16 of the second joint member 12. As a result, frictional heat is generated and the second joint member 12 starts to be softened, which allows the tool to be pushed downward from the welding surface 16. Then, the tool reaches the first joint surface 15. Thereafter, with the distal end of the tool being rotating, the tool is moved in the longitudinal direction of the second joint member 12. As a result, plastic flow of the first joint member 11 and the second joint member 12 is caused, and the first joint member 11 and the second joint member 12 are mixed together along the moving path of the tool, and thereby integrated together.

In the description below, a portion along the moving path of the tool where the plastic flow of the first joint member 11 and the second joint member 12 is caused and the first joint member 11 and the second joint member 12 are integrated together is referred to as a "friction stir weld" or "FSW weld". It should be noted that the cross section of such an FSW weld 21 is in the shape of an inverted triangle or an inverted trapezoid, which is tapered in the advancing direction of the tool from a position where the tool is pushed against the welding surface 16.

In the dissimilar material joint 10, a plurality of FSW welds 21 arranged in the width direction extend in the longitudinal direction. That is, the tool is moved in the longitudinal direction several times while the position where the tool is pushed against the welding surface 16 is changed in the width direction. In the present embodiment, five FSW welds 21 are formed and they are arranged in the width direction, i.e., the tool is moved in the longitudinal direction five times.

The FSW welds 21 are formed in each segment entirely in the longitudinal direction from one end to the other end of each segment. The segments, in each of which the FSW welds 21 are thus formed, are connected to one another sequentially. As a result, a plurality of FSW welds 21 are formed, each of which extends continuously in the circumferential direction. Thus, the dissimilar material joint 10 is provided with the plurality of FSW welds 21, which are formed to be ring-shaped when seen in plan view and which are substantially concentrically arranged.

The tool is moved by, for example, a welding robot (not shown) configured to run on the welding surface 16 while holding the tool, or a welding truck (not shown) configured to be conveyed and guided on a rail (not shown) extending parallel to the longitudinal direction. Not only a distance by which the welding robot is capable of running, but also the length of the rail defining the distance by which the welding truck can be conveyed, can be made longer than the segment's length that is allowed in explosive welding or vacuum rolling. Thus, the length of each segment forming the dissimilar material joint 10 is not restricted by a technical problem in terms of joining technology, and the length of each segment can be made longer than the segment's length that is allowed in explosive welding or vacuum rolling. Accordingly, the number of segments of the dissimilar material joint 10 can be reduced, which makes it possible to reduce the manufacturing man-hours and manufacturing cost of the dissimilar material joint 10, and consequently makes it possible to reduce the manufacturing man-hours and manufacturing cost of the skirt 5 and the LNG carrier 1.

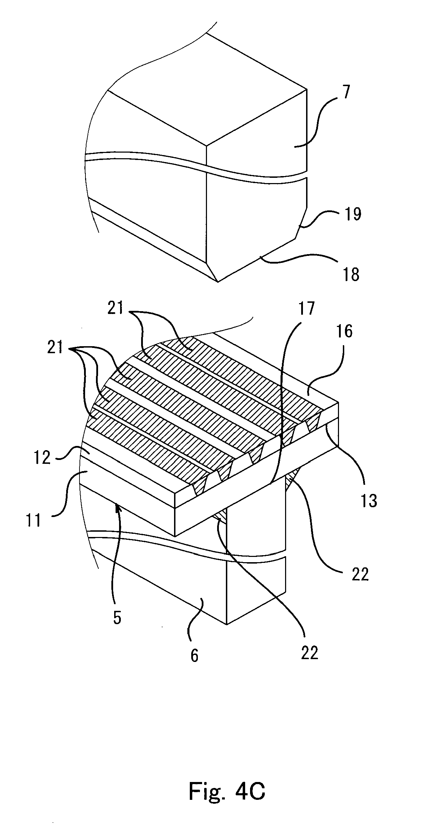

Fig. 4C is a perspective view showing a state where the first joint member 11 shown in Fig. 4B is joined to the hull-side member 6. As shown in Fig. 4C, the first joint member 11 is set on the upper surface of the hull-side member 6, such that the center line of the first joint member 11 in the width direction coincides with the center line of the hull-side member 6 in the thickness direction. The width of the first joint member 11 is greater than the thickness of the hull-side member 6. One end portion and the other end portion of the first joint member 11 in the width direction protrude from the upper end portion of the hull-side member 6 toward the inner side and the outer side in the thickness direction, respectively.

The hull-side member 6 is fillet welded to the first joint member 11. In the present embodiment, the outer edge of the upper surface 17 of the hull-side member 6 is fillet welded to the lower surface 13 of the first joint member 11, and also, the inner edge of the upper surface 17 of the hull-side member 6 is fillet welded to the lower surface 13 of the first joint member 11. In this manner, at a boundary portion between the hull-side member 6 and the dissimilar material joint 10, a pair of fillet welds 22 is formed such that the fillet welds 22 are away from each other in the thickness direction of the tank-side member 7 (i.e., the width direction of the dissimilar material joint 10), and such that the fillet welds 22 extend in the longitudinal direction in a bead-like manner. It should be noted that, unlike the time of mounting the hull-side member 6 and the dissimilar material joint 10 onto the hull 2, the hull-side member 6 and the dissimilar material joint 10 may be set upside down at the time of performing the fillet welding. Since the first joint member 11 is fabricated from the same kind of metal as that of the hull-side member 6, the fillet welding can be readily performed.

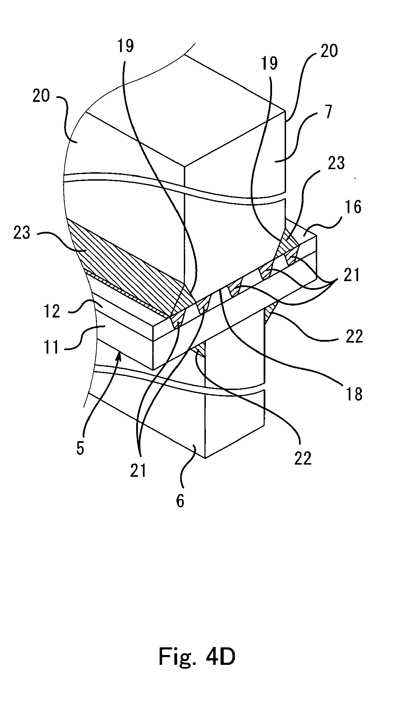

Fig. 4D is a perspective view showing a state where the second joint member 12 shown in Fig. 4C is joined to the tank-side member 7. As shown in Fig. 4D, a lower surface 18 of the tank-side member 7 is set on the welding surface 16 of the second joint member 12, such that the center line of the lower surface 18 in the thickness direction coincides with the center line of the second joint member 12 in the thickness direction. The width of the second joint member 12 is greater than the thickness of the tank-side member 7. One end portion of the second joint member 12 in the width direction protrudes from the inner edge of the lower surface 18 of the tank-side member 7 toward the inner side in the thickness direction, and the other end portion of the second joint member 12 in the width direction protrudes from the outer edge of the lower surface 18 of the tank-side member 7 toward the outer side in the thickness direction.

The tank-side member 7 is fillet welded to the second joint member 12. In the present embodiment, the outer edge of the lower surface 18 of the tank-side member 7 is fillet welded to the welding surface 16 of the second joint member 12, and also, the inner edge of the lower surface 18 of the tank-side member 7 is fillet welded to the welding surface 16 of the second joint member 12. Thus, a pair of fillet welds 23 is formed at a boundary portion between the tank-side member 7 and the dissimilar material joint 10. At the lower end of an inner side surface 20 of the tank-side member 7, the inner-side fillet weld 23 is formed to reach the welding surface 16 of the second joint member 12. At the lower end of an outer side surface 20 of the tank-side member 7, the outer-side fillet weld 23 is formed to reach the welding surface 16 of the second joint member 12. In this manner, the pair of fillet welds 23 is formed such that the fillet welds are away from each other in the thickness direction of the tank-side member 7 (i.e., the width direction of the dissimilar material joint 10), and such that the fillet welds 23 extend in the longitudinal direction in a bead-like manner.

Returning to Fig. 3, when seen in the normal direction to the second joint surface 15 (i.e., the vertical direction), the fillet welds 23 are arranged in such a manner as to overlap FSW welds 21 of the dissimilar material joint 10. Accordingly, at the positions where the fillet welds 23 are formed, the second joint member 12 is joined to the first joint member 11 via the FSW welds 21, and also, the second joint member 12 is joined to the tank-side member 7 via the fillet welds 23. Thus, the tank-side member 7 is vertically and linearly connected to the first joint member 11 via the second joint member 12.

Therefore, when a vertical tensile load is exerted on the skirt 5, the load flows smoothly in the vertical direction. The same is true also when a bending load that bends the skirt 5 toward the inner side is exerted. If the fillet welds 23 and the FSW welds 21 are arranged at different positions from each other when seen in plan view, then a load flow between the fillet welds 23 and the FSW welds 21 becomes complex. This may cause excessive stress concentration to occur at the fillet welds 23. In this respect, the skirt 5 according to the present embodiment is configured to reduce the complexity of the load flow, which makes is possible to alleviate stress concentration at the fillet welds 23.

A pair of grooves 19 is formed at the outer and inner edges of the lower surface 18 of the tank-side member 7. The pair of fillet welds 23 is formed such that the fillet welds 23 are formed in the respective grooves 19. Each fillet weld 23 has a substantially equilateral triangular cross section. The thickness of the tank-side member 7 fabricated from an aluminum alloy is greater than the thickness of the hull-side member 6 fabricated from steel. Since edge preparation is performed on the lower surface 18 of the tank-side member 7, the joining strength of the fillet welds 23 is improved.

In addition, if the inner side surface 20 of the tank-side member 7 is imaginarily extended downward, then the extended imaginary plane passes through not only the upper end but also the lower end of the FSW weld 21 that overlaps the inner-side fillet weld 23 when seen in plan view. That is, the inner side surface 20 of the tank-side member 7 overlaps the FSW weld 21 when seen in the normal direction to the second joint surface 15. Meanwhile, the groove 19 cuts in the inner side surface 20 toward the center of the tank-side member 7 in the thickness direction, and the fillet weld 23 is formed in the groove 19. In this manner, the groove 19 is formed, and thereby an area in which the fillet weld 23 overlaps the FSW weld 21 when seen in plan view can be favorably increased. The above description similarly applies to a relationship among the outer side surface 20 of the tank-side member 7, the outer-side fillet weld 23, and the FSW weld 21 that is disposed to overlap the outer-side fillet weld 23.

The tank-side member 7 is fillet welded to the second joint member 12, such that the lower surface 18 is in surface contact with the welding surface 16 of the second joint member 12. Accordingly, of the lower surface 18 of the tank-side member 7, the portion between the pair of fillet welds 23 is in contact with the upper surface of the second joint member 12. Accordingly, when a vertical compressive load due to the weight of the tank 4 and the weight of the liquefied natural gas in the tank 4 is exerted on the skirt 5, the load can be transferred to the hull 2 via the dissimilar material joint 10 and the hull-side member 6, and eventually, the load can be received by the hull 2.

In the present embodiment, five FSW welds 21 are arranged in the width direction at substantially regular intervals. When seen in the normal direction to the second joint surface 15, the outermost two FSW welds 21 are arranged in such a manner as to overlap the pair of fillet welds 23, and the three FSW welds 21 in the middle are arranged in the width direction between the pair of fillet welds 23. In this manner, a plurality of FSW welds 21 are provided between the pair of fillet welds 23 when seen in the normal direction to the second joint surface 15. Therefore, even though the first joint member 11 and the second joint member 12 are joined together such that their flat surfaces are butted together, high joining strength can be obtained.

Fig. 4E is a perspective view showing the arrangement of an advancing side AS and a retreating side RS of each FSW weld 21 shown in Fig. 4C. Each FSW weld 21 is formed by moving a friction stir welding tool 30 in the longitudinal direction of the dissimilar material joint while rotating the tool 30. In this manner, each FSW weld 21 is formed such that the FSW weld 21 has a certain width. While the tool 30 is being moved, the rotation direction of the tool 30 does not change. By moving the tool 30 in the longitudinal direction, an FSW weld 21 having the certain width is formed. In each FSW weld 21, at the end of one side of the width direction, the rotation direction of the tool 30 is the same as the moving direction of the tool 30, but at the end of the other side of the width direction, the rotation direction of the tool 30 is the opposite direction to the moving direction of the tool 30. In the description below, out of the two sides of each FSW weld 21 in the width direction, the one side where the rotation direction of the tool is the same as the moving direction of the tool is referred to as an "advancing side AS", and the other side where the rotation direction of the tool is the opposite direction to the moving direction of the tool is referred to as an "retreating side RS".

So-called hooking tends to occur at the advancing side AS. Therefore, at the retreating side RS, the joining strength between the first joint member 11 and the second joint member 12 can be increased compared to the advancing side AS. In the present embodiment, in each of the FSW welds 21 other than the FSW weld positioned at the center in the width direction, the advancing side AS is positioned relatively close to the center of the dissimilar material joint 10 in the width direction, and the retreating side RS is positioned relatively far from the center of the dissimilar material joint 10 in the width direction. Accordingly, the strength of the dissimilar material joint 10 against shear and tensile loads in the width direction is improved.

In this case where the retreating side RS of each FSW weld 21 is positioned at the end edge side in the width direction, unless the rotation direction of the tool 30 is changed, it is necessary that the moving direction of the tool 30 when forming the FSW weld 21 at one side seen from the center in the width direction (e.g., at the inner side in the thickness direction), and the moving direction of the tool 30 when forming the FSW weld 21 at the other side seen from the center in the width direction (e.g., at the outer side in the thickness direction), be opposite directions to each other. Based on this, the FSW weld 21 at the one side and the FSW weld 21 at the other side are formed alternately. In such a manner, two FSW welds 21 can be formed while the tool 30 makes one reciprocating movement in the longitudinal direction. In this manner, the running of the tool 30 always involves the formation of a FSW weld 21. This makes it possible to improve the efficiency in manufacturing the dissimilar material joint 10.

A thread groove is formed in the outer peripheral surface of the friction stir welding tool 30 for the purpose of, for example, facilitating the stirring of the material. In the present embodiment, the rotation direction of the tool 30 is the opposite direction to the thread direction. In the example of Fig. 4E, the tool 30 rotates clockwise when seen from above the tool 30, and the thread of the tool 30 is a left-hand thread. The mechanism of stirring of the material varies depending on whether the rotation direction of the tool 30 is the same direction as the thread direction or the opposite direction to the thread direction. Accordingly, the quality of the FSW weld 21 also varies depending on whether the rotation direction of the tool 30 is the same as the thread direction or not.

In order to arrange the retreating side RS and the advancing side FS of each FSW weld 21 as described above without changing the moving direction of the tool 30, it is necessary to change the rotation direction of the tool 30. In order to stabilize the quality of the FSW welds 21 in such a case, it is necessary to replace the tool 30 to change the thread direction in accordance with the change in the rotation direction of the tool 30. In the present embodiment, the retreating side RS and the advancing side FS are arranged as described above by changing the moving direction of the tool. This makes it possible to stabilize the quality of the FSW welds 21 without replacing the tool.

Hereinafter, advantageous effects obtained by suitably arranging the advancing side FS and the retreating side RS of each FSW weld 21 are described based on results of experiments conducted by the inventors of the present invention. As shown in Table 1, the inventors prepared a dissimilar material joint test piece in which the retreating side RS of each FSW weld 21 is positioned at the end edge side in the width direction (i.e., the test piece corresponds to the present embodiment), and also prepared a dissimilar material joint test piece in which all of the retreating sides RS of the FSW welds 21 are positioned at the same side (i.e., the test piece serves as a comparative example of the present embodiment). The inventors measured the tensile strength of each of these two test pieces. It should be noted that the tensile strength σ shown in Table 1 is a converted value as the nominal stress of an aluminum web (referred to as the "tank-side member 7" in the above description of the embodiment). The manner of calculating the tensile strength σ is specified outside Table 1.

In addition, as shown in Table 2, the inventors prepared a test piece by joining an aluminum alloy flat plate and a stainless steel flat plate together by friction stir welding. The inventors measured the tensile shear strength of the test piece in a case where the retreating side of the aluminum alloy flat plate was stretched, and also measured the tensile shear strength of the test piece in a case where the advancing side of the aluminum alloy flat plate was stretched. It should be noted that a test piece No. 1 was prepared by using a friction stir welding tool having a distal end diameter of 7 mm, and a test piece No.2 was prepared by using a friction stir welding tool having a distal end diameter of 9 mm.

**[Table 1]**

| | | Tensile Strength σ* [MPa] | Tensile Strength Average Value |
|---|---|---|---|
| Present Embodiment | -IE | 69.5 | 68.6 |
| | -2C | 68.2 | |
| | -3S | 68.2 | |
| Comparative Example | -IE | 66.1 | 65.9 |
| | -2C | 65.8 | |
| | -3S | 65.8 | |
| Present Embodiment | | Comparative Example | |
| 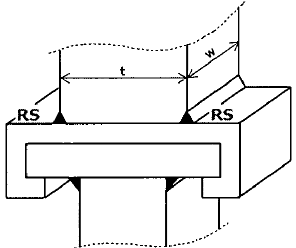 | | 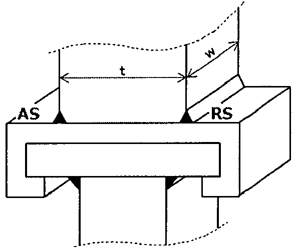 | |

| | | | |
|---|---|---|---|
| *: converted value as the nominal stress of an aluminum web σ = F/(t×w) F: maximum load t: maximum load w: thickness of tensile test piece | | | |

**[Table 2]**

| | Distal End Diameter of Tool | Upper Plate | | Lower Plate | | Tensile Shear Strength [N/mm] | |
|---|---|---|---|---|---|---|---|
| | | Material | Thickness | Material | Thickness | AS Stretched | RS Stretched |
| No.1 | 7 mm | A3003 | 11 mm | SUS | 12 mm | 416 | 518 |
| No.2 | 9 mm | A3003 | 11 mm | SUS | 12 mm | 768 | 934 |
| RS Stretched | | | | AS Stretched | | | |
| 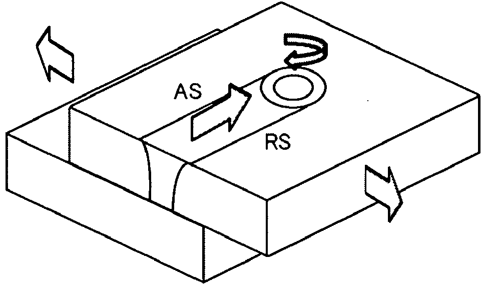 | | | | 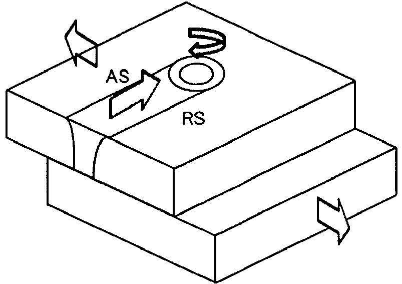 | | | |

It is understood from Table 1 that the tensile strength of the dissimilar material joint improves when each retreating side RS is disposed at the end edge side in the width direction. It is understood from Table 2 that the tensile shear strength of the dissimilar material joint improves when each retreating side RS is disposed at the end edge side in the width direction. Since in the present embodiment each retreating side RS is disposed at the end edge side in the width direction, the strength of the dissimilar material joint is high, thus making it possible to provide a highly reliable tank support member.

### [Embodiment 2]

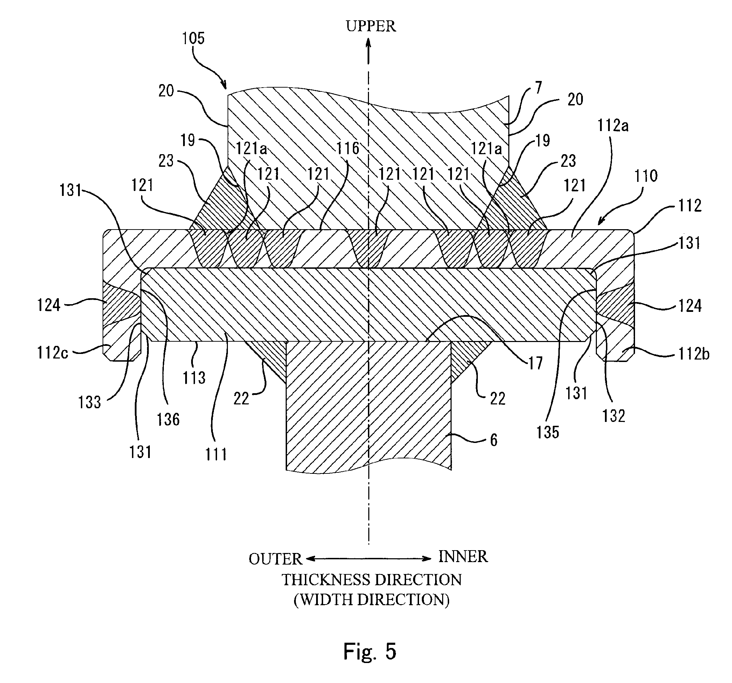

Fig. 5 is a sectional view showing a dissimilar material joint 110 according to Embodiment 2 of the present invention. Embodiment 2 is different from Embodiment 1 in that a second joint member 112 according to Embodiment 2 includes a pair of protruding portions 112b and 112c. Hereinafter, a skirt 105 and the dissimilar material joint 110 according to Embodiment 2 are described with a focus on the differences between Embodiment 1 and Embodiment 2. It should be noted that the skirt 105 and the dissimilar material joint 110 according to the present embodiment are also suitably applied to the LNG carrier 1 shown in Fig. 1.

As shown in Fig. 5, the skirt 105 includes the hull-side member 6, the tank-side member 7, and the dissimilar material joint 110. The dissimilar material joint 110 includes: a first joint member 111 fillet welded to the hull-side member 6; and a second joint member 112 fillet welded to the tank-side member 7 and friction stir welded to the first joint member 111. The hull-side member 6 and the tank-side member 7 are the same as those of Embodiment 1. Similar to Embodiment 1, the first joint member 111 is formed in the shape of a flat plate, and includes a lower surface 113 and a first joint surface 114. The first joint member 111 includes tapered portions 131. The tapered portions 131 are formed at both ends of the lower surface 113 in the width direction by chamfering, and are formed at both ends of the first joint surface 114 in the width direction by chamfering. Accordingly, the cross section of the first joint member 111 is in the shape of an octagon that is elongated in the width direction.

The second joint member 112 includes: a flat plate portion 112a set on the upper surface 113 of the first joint member 111; and the pair of protruding portions 112b and 112c protruding downward from both ends of the flat plate portion 112a in the width direction. Similar to Embodiment 1, the flat plate portion 111 includes a welding surface 116 and a second joint surface 115.

The pair of protruding portions 112b and 112c includes facing surfaces 135 and 136 facing each other in the width direction. The second joint member 112 is inverted U-shaped and elongated in the width direction. Accordingly, the second joint member 112 includes a recess that is open downward and that is surrounded by the lower surface 115 of the flat plate portion 111a and the facing surfaces 135 and 136. The cross section of the recess is rectangular.

The first joint member 111 is joined to the second joint member 112 in the following manner: the second joint member 112 is brought close to the first joint member 111 in such a manner that the second joint member 112 is placed over the first joint member 111; and thereby the first joint member 111 is accommodated in the recess and the second joint surface 115 is in surface contact with the first joint surface 114.

The distance between the facing surfaces 135 and 136 is substantially the same as the dimension of the first joint member 111 in the width direction. Accordingly, the inner-side protruding portion 112b covers an inner side surface 132 of the first joint member 111 such that the inner-side facing surface 135 is in surface contact with the inner side surface 132 of the first joint member 111, and the outer-side protruding portion 112c covers an outer side surface 133 of the first joint member 111 such that the outer-side facing surface 136 is in surface contact with the outer side surface 133 of the first joint member 111. Since the tapered portions 131 are formed at both ends of the first joint surface 114 of the first joint member 111 in the width direction, the protruding portions 112b and 112c can be prevented from interfering with the first joint surface 114 in the process of placing the first joint member 111 into the recess.

Thereafter, the first joint member 111 is friction stir welded to the second joint member 112. In the present embodiment, a pair of FSW welds 124 is formed, such that the FSW welds 124 are provided in the inner-side and outer-side protruding portions 112b and 112c, respectively. The inner-side FSW weld 124 is formed in the following manner: first, the tool is pushed against a surface of the protruding portion 112b (the opposite surface to the surface defining the recess) until the tool reaches the inner side surface 132 of the first joint member 111; and then the tool is moved in the longitudinal direction. In this manner, plastic flow of the first joint member 111 and the protruding portion 112b of the second joint member 112 is caused, and then the first joint member 111 and the protruding portion 112b of the second joint member 112 are joined together. The same is true of the outer-side FSW weld 124. That is, plastic flow of the first joint member 111 and the protruding portion 112c of the second joint member is caused, and then the first joint member 111 and the protruding portion 112c of the second joint member are joined together.

If the protruding portions 112b and 112c are thus provided, when a shear load in the width direction is exerted on the first joint member 111 and the flat plate portion 112a of the second joint member 112, the shear load can be received by the protruding portions 112b and 112c, and thereby the load resistance of the dissimilar material joint 110 is improved. Since such protruding portions 112b and 112c are provided with the pair of FSW welds 124, even if a shear load in the longitudinal direction is exerted on the first joint member 111 and the second joint member 112, the shear load can be received not only at FSW welds 121 but also at the FSW welds 124, and thereby the load resistance of the dissimilar material joint 110 is improved.

In the present embodiment, a plurality of FSW welds 121 each extending in the longitudinal direction are arranged in the width direction in the flat plate portion 111a. In the present embodiment, seven FSW welds 121 in total are formed in the flat plate portion 111a. These seven FSW welds 121 are formed in the same manner as that of the plurality of FSW welds 21 (see Fig. 3) according to Embodiment 1. One of the seven FSW welds 121 is positioned at the center of the dissimilar material joint 110 in the width direction. The remaining six FSW welds 121 are arranged such that three FSW welds 121 are provided at one side in the width direction, and the other three FSW welds 121 are provided at the other side in the width direction, i.e., one group of three FSW welds 121 and the other group of three FSW welds 121 are arranged symmetrically with respect to the center line in the width direction.

When forming the plurality of FSW welds 121, frictional heat generated in the process of forming the plurality of FSW welds 121 may cause a warp and deformation of the flat plate portion 111 a such that the flat plate portion 111a is bent away from the first joint member 111, and thus there is a risk that the interface therebetween becomes open. The same is true in the case of performing fillet welding. In the present embodiment, the pair of protruding portions 112b and 112c provided at both ends of the flat plate portion 111a in the width direction is joined to the first joint member 111 at the FSW welds 124. This structure is capable of resisting against the aforementioned warp, and thus the deformation of the flat plate portion 111a can be suppressed.

The FSW welds 121 are each in a triangular or trapezoidal shape, which is tapered in the advancing direction of the tool. Three FSW welds 121 positioned at one side in the width direction sequentially overlap one another in the width direction at their relatively wide upper portions (i.e., portions upstream with respect to the advancing direction of the tool), thereby forming a continuous portion 121a where the three FSW welds 121 are continuous with one another. Since these FSW welds 121 are formed such that they are sequentially continuous in the width direction, joining strength is well improved locally. In the present embodiment, the lower ends of these three FSW welds 121 are away from one another in the width direction. This makes it possible to, while improving the joining strength locally by densely arranging the plurality of FSW welds 121, widely exert the joining strength improving effect in the width direction. The same is true of the three FSW welds 121 positioned at the other side in the width direction.

The inner-side fillet weld 23 vertically overlaps two inner-side FSW welds 121 among the three FSW welds 121 positioned at one side in the width direction. Grooves 19 are formed in the tank-side member 7. If the inner side surface of the tank-side member 7 is imaginarily extended downward, then the extended imaginary plane passes between the position where the tool is inserted to form the central FSW weld 121 among the three FSW welds 121 and the position where the tool is inserted to form the inner-end FSW weld 121 among the three FSW welds 121.

Accordingly, when a fillet weld 23 is formed in one of the grooves 19 such that the fillet weld 23 is in the shape of a triangle that protrudes toward the center of the tank-side member 7 beyond the inner side surface, the formed fillet weld 23 is positioned such that the fillet weld 23 overlaps the aforementioned two inner-side FSW welds 121. Since the fillet weld 23 is positioned such that the fillet weld 23 vertically overlaps the FSW welds 121 that form the continuous portion 121a, the vicinity of the fillet weld 23 is vertically and firmly connected together, and thereby the strength of the vicinity portion is improved favorably. The above description also applies to a relationship among the outer-side fillet weld 23, the FSW welds 121 positioned at the other side in the width direction, and the outer side surface of the tank-side fixing member 7.

It should be noted that, also in the present embodiment, when seen in the normal direction to the second joint surface 115, the FSW weld 121 that is positioned in the middle between the outermost two FSW welds 121 is provided between the pair of fillet welds 23. Therefore, even though the first joint member 111 and the second joint member 112 are joined together such that their flat surfaces are butted together, high joining strength can be obtained.

### [Embodiment 3]

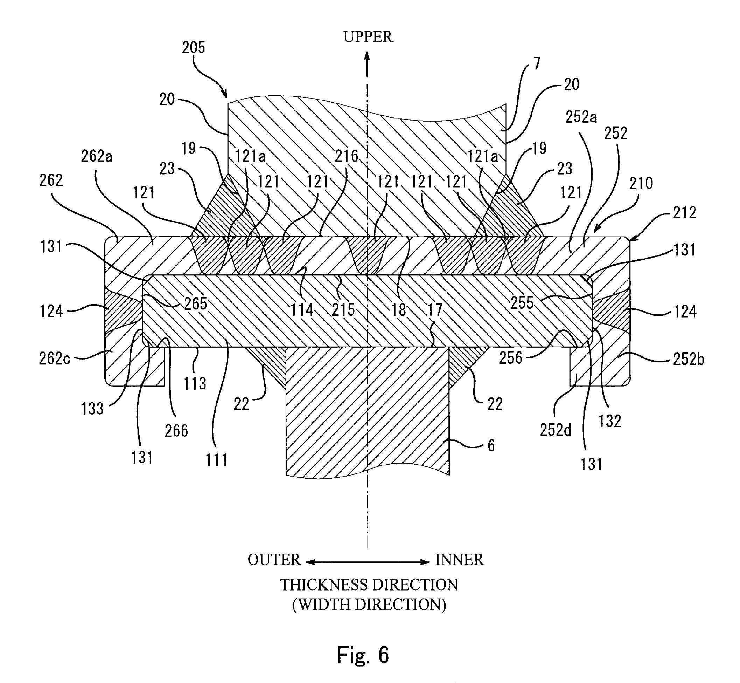

Fig. 6 is a sectional view of a dissimilar material joint 210 according to Embodiment 3 of the present invention. Embodiment 3 is different from the above-described embodiments in that a second joint member 212 according to Embodiment 3 includes turned portions 252d and 262e, and the second joint member 212 is formed by joining a first half body and a second half body together. Hereinafter, a skirt 205 and the dissimilar material joint 210 according to Embodiment 3 are described with a focus on the differences of Embodiment 3 from the above-described embodiments. It should be noted that the skirt 205 and the dissimilar material joint 210 according to the present embodiment are also suitably applied to the LNG carrier 1 shown in Fig. 1.

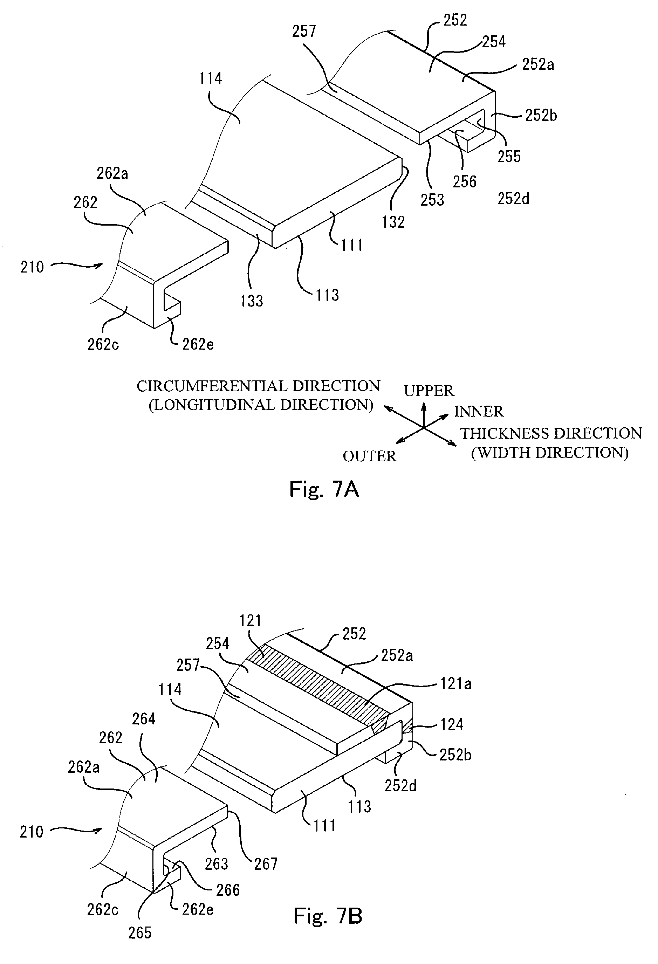

As shown in Fig. 6, the skirt 205 includes the hull-side member 6, the tank-side member 7, and the dissimilar material joint 210. The dissimilar material joint 210 includes: the first joint member 111 fillet welded to the hull-side member 6; and the second joint member 212 fillet welded to the tank-side member 7 and friction stir welded to the first joint member 111. The hull-side member 6 and the tank-side member 7 are the same as those of Embodiment 1. The first joint member 111 is the same as that of Embodiment 2. In the present embodiment, as described below with reference to Figs. 7A to 7C, the second joint member 212 is formed by joining a first half body 252 and a second half body 262 together, which are divided in the width direction.

The second joint member 212 thus formed includes a flat plate portion 212a, a pair of protruding portions 252b and 262c, and a pair of turned portions 252d and 262e. The flat plate portion 212a is formed to be the same as the flat plate portion 112a of Embodiment 2 as a result of having undergone a manufacturing process described below. The flat plate portion 212a includes a welding surface 216 and a second joint surface 215.

The pair of protruding portions 252d and 262c is formed such that the protruding portions protrude downward from both ends of the flat plate portion 212a in the width direction. The inner-side turned portion 252d protrudes from the lower end of the inner-side protruding portion 252b toward the center of the flat plate portion 212a in the width direction. The outer-side turned portion 262e protrudes from the lower end of the outer-side protruding portion 262c toward the center of the flat plate portion 212a in the width direction. In this manner, the pair of turned portions 252d and 262e is formed such that the turned portions 252d and 262e protrude from the corresponding protruding portions 252b and 262c, respectively, so as to approach each other in the width direction.

Since the second joint member 212 includes the pair of turned portions 252d and 262e, one end and the other end of the second joint member 212 in the width direction are both substantially in the shape of U rotated by 90 degrees. The second joint member 212 includes a recess that is surrounded by the second joint surface 215, facing surfaces 255 and 265 of the pair of respective protruding portions 252b and 262c, and upper surfaces 256 and 266 of the pair of respective turned portions 252d and 262e. The recess is open downward, and the area of the downward opening is less than that of the downward opening of Embodiment 2 due to the turned portions 252d and 262e.

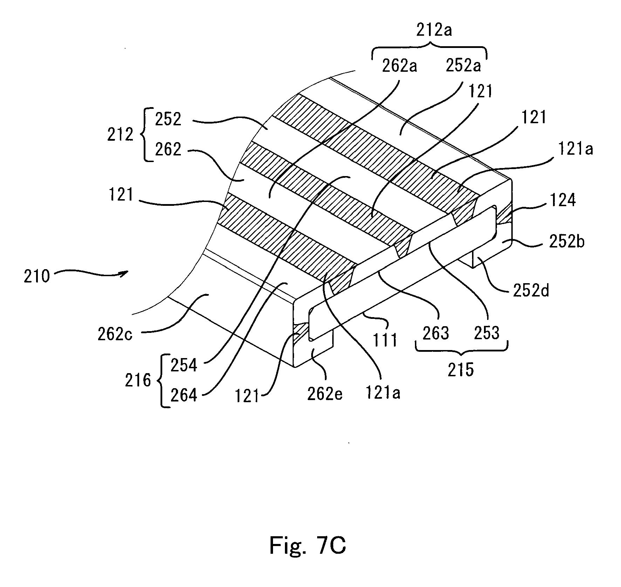

Fig. 7A is an exploded perspective view of the dissimilar material joint 210 shown in Fig. 6. Fig. 7B is a perspective view showing a state where the first half body 252 shown in Fig. 7A is joined to the first joint member 212. Fig. 7C is a perspective view showing a state where the second half body 262 shown in Fig. 7B is joined to the first joint member 111 and the first half body 252. As shown in Figs. 7A to 7C, the second joint member 212 is formed by joining the first half body 252 and the second half body 262 together, which are divided in the width direction. In the present embodiment, the first half body 252 and the second half body 262 are in such shapes that are obtained by dividing the second joint member 212 in half in the width direction along a parting line, which is the center line of the flat plate portion 212a in the width direction.

As shown in Fig. 7A, the first half body 252 includes a first flat plate half portion 252a, which forms a half of the flat plate portion 212a at one side in the width direction. A lower surface 253 of the first flat plate half portion 252a forms a half of the second joint surface 215 at one side in the width direction, and an upper surface 254 of the first flat plate half portion 252a forms a half of the welding surface 216 at one side in the width direction. The aforementioned inner-side protruding portion 252b and turned portion 252d are included in the first half body 252. Accordingly, the first half body 252 is substantially in the shape of J rotated by 90 degrees. Thus, the first half body 252 includes a recess that is open toward the other side in the width direction and that is surrounded by the lower surface 253 of the first flat plate half portion 252a, the facing surface 255 of the protruding portion 252b, and the upper surface 256 of the turned portion 252d.

The second half body 262 includes a second flat plate half portion 262a, which forms a half of the flat plate portion 212a at the other side in the width direction. A lower surface 263 of the second flat plate half portion 262a forms a half of the second joint surface 215 at the other side in the width direction, and an upper surface 264 of the second flat plate half portion 262a forms a half of the welding surface 216 at the other side in the width direction. The aforementioned inner-side protruding portion 262c and turned portion 262e are included in the second half body 262. Accordingly, the second half body 262 is substantially in the shape of J rotated by 90 degrees. Thus, the second half body 262 includes a recess that is open toward the one side in the width direction and that is surrounded by the lower surface 263 of the second flat plate half portion 262a, the facing surface 265 of the protruding portion 262c, and the upper surface 266 of the turned portion 262e.

As shown in Figs. 7A and 7B, in the manufacturing of the dissimilar material joint 210, first, the first half body 252 and the first joint member 111 are arranged in the width direction, and the first half body 252 is moved in the width direction relative to the first joint member 111. At the time, the lower surface 253 of the first flat plate half portion 252a is brought into surface contact with the first joint surface 114, and the upper surface 256 of the turned portion 252d is brought into surface contact with the lower surface 113 of the first joint member 111. In this state, the relative movement is further continued, and thereby the facing surface 255 of the protruding portion 252b is brought into contact with the inner side surface 132 of the first joint member. In this manner, one end of the first joint member 111 in the width direction is accommodated in the recess of the first half body 252, such that the first joint member 111 is sandwiched between the first flat plate half portion 252a and the turned portion 252d. Similar to Embodiment 2, the first joint member 111 includes the tapered portions 131. Therefore, the first joint member 111 can be readily placed into the recess of the first half body 252.

As shown in Fig. 7B, the protruding portion 252b is friction stir welded to the first joint member 111, and an FSW weld 124 is formed in the protruding portion 252b. Further, the first flat plate half portion 252a is friction stir welded to the first joint member 111, and a plurality of FSW welds 121 are formed in the first flat plate half portion 252a such that the FSW welds 121 are arranged in the width direction. It should be noted that, also in the present embodiment, the plurality of FSW welds 121 form the continuous portion 121a, in which the FSW welds 121 sequentially and continuously overlap one another in the width direction.

As shown in Figs. 7B and 7C, next, the second half body 262 and the second joint member 111 are arranged in the width direction, and the second half body 262 is moved in the width direction relative to the first joint member 111. At the time, the lower surface 263 of the second flat plate half portion 262a is brought into surface contact with the first joint surface 114, and the upper surface 266 of the turned portion 262e is brought into surface contact with the lower surface 113 of the first joint member 111. In this state, the relative movement is further continued, and thereby the facing surface 265 of the protruding portion 262c is brought into contact with the outer side surface 133 of the first joint member 111. In this manner, the other end of the first joint member 111 in the width direction is accommodated in the recess of the second half body 262, such that the first joint member 111 is sandwiched between the second flat plate half portion 262a and the turned portion. Further, a side end surface 267 of the second flat plate half portion 262 comes into contact with a side end surface 257 of the first flat plate half portion 252.

As shown in Fig. 7C, the protruding portion 262c is friction stir welded to the first joint member 111, and an FSW weld 124 is formed in the protruding portion 262c. Further, the second flat plate half portion 262a is friction stir welded to the first joint member 111, and a plurality of FSW welds 121 are formed in the second flat plate half portion 262a such that the FSW welds 121 are arranged in the width direction. It should be noted that, similar to the first flat plate half portion 252a, the continuous portion 121a is formed also in the second flat plate half portion 262a.

In the present embodiment, the tool is pushed against a position where the first flat plate half portion 252 and the second flat plate half portion 262 are in contact with each other. As a result, plastic flow of the first flat plate half portion 252a, the second flat plate half portion 262a, and the first joint member 111 is caused, and the first flat plate half portion 252a, the second flat plate half portion 262a, and the first joint member 111 are mixed together. Then, the first half body 252, the second half body 262, and the first joint member 111 are integrally joined together at a FSW weld 121 that extends in the longitudinal direction along the boundary between the first flat plate half portion 252a and the second flat plate half portion 262a. In this manner, the first flat plate half portion 252a and the second flat plate half portion 262a are joined together in the width direction, and thus the flat plate portion 212a, the second joint surface 215, the welding surface 216, and the second joint member 212 are formed. The dissimilar material joint 210 thus formed is fillet welded to the hull-side member 6 (see Fig. 6) and the tank-side member 7 (see Fig. 6). Also in the present embodiment, when seen in the normal direction to the second joint surface 215, the FSW weld 121 that is positioned in the middle between the outermost two FSW welds 121 is provided between the pair of fillet welds 23. Therefore, even though the first joint member 111 and the second joint member 212 are joined together such that their flat surfaces are butted together, high joining strength can be obtained.

If the pair of turned portions 252d and 262e is thus formed, the first joint member 111 is sandwiched by the flat plate portion 212a and the turned portions 252d and 262e in the normal direction to the second joint surface 215. Accordingly, when the flat plate portion 212a and the first joint member 111 are friction stir welded together, the turned portions 252d and 262e in cooperation with the first joint member 111 can suppress a warp due to frictional heat from occurring in the flat plate portion 212a, and also suppress a warp from occurring during fillet welding. There are cases where the tank 4 (see Fig. 1) is lifted vertically based on inertial force due to ship hull motion (especially heaving) and a great vertical tensile load is exerted on the first joint member 111 and the second joint member 212. In such a case, the turned portions 252d and 262e get caught on the lower surface 113 of the first joint member 111, thereby exerting an anchor effect. This greatly improves the joint reliability of the dissimilar material joint 210.

If the second joint member 212 is formed from a single component, then in order to accommodate the first joint member 111 in the recess formed by the entire second joint member 212, the first joint member 111 and the second joint member 212 are arranged in a line in the longitudinal direction in advance, and then the first joint member 111 is moved in the longitudinal direction relative to the second joint member 212. In this case, in the equipment for manufacturing the dissimilar material joint 210, the dimension of a section for joining the first joint member 111 to the second joint member 212 needs to be twice or more as great as the length of each segment of the dissimilar material joint 210. In other words, the length of each segment needs to be reduced in accordance with the section. In this respect, in the present embodiment, the second joint member 212 is formed by joining the pair of half bodies 252 and 262 together, which are divided in the width direction. Accordingly, the first half body 252 and the second half body 262 may be set in advance such that they are placed adjacent to the first joint member 111 in the width direction. Therefore, the length of each segment of the dissimilar material joint 210 can be made great as much as possible.

### [Embodiment 4]

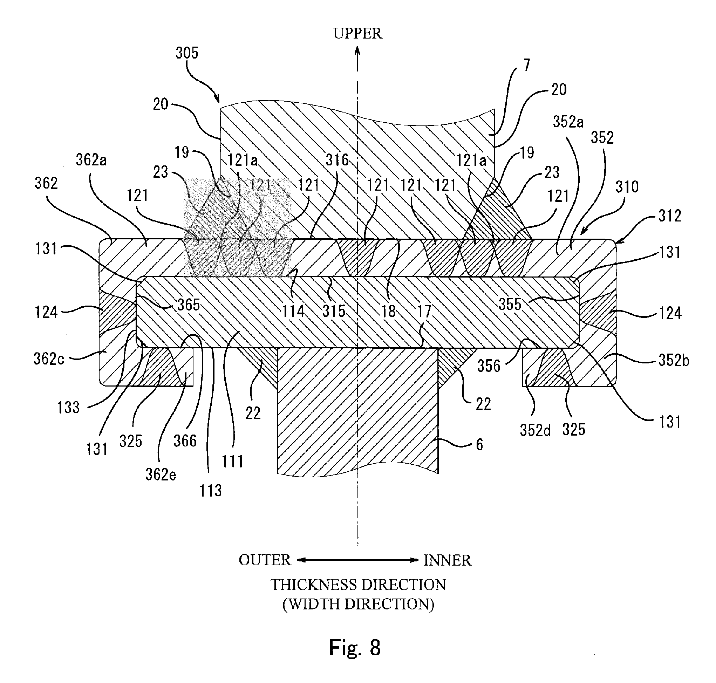

Fig. 8 is a sectional view of a dissimilar material joint 310 according to Embodiment 4 of the present invention. Embodiment 4 is different from Embodiment 3 in that turned portions 352d and 362e according to Embodiment 4 are friction stir welded to the first joint member 111. Hereinafter, a skirt 305 and the dissimilar material joint 310 according to Embodiment 4 are described with a focus on the differences of Embodiment 4 from the above-described embodiments. It should be noted that the skirt 305 and the dissimilar material joint 310 according to the present embodiment are also suitably applied to the LNG carrier 1 shown in Fig. 1.

As shown in Fig. 8, the skirt 305 includes the hull-side member 6, the tank-side member 7, and the dissimilar material joint 310. The dissimilar material joint 310 includes: the first joint member 111 fillet welded to the hull-side member 6; and a second joint member 312 fillet welded to the tank-side member 7 and friction stir welded to the first joint member 111. The hull-side member 6 and the tank-side member 7 are the same as those of Embodiment 1. The first joint member 111 is the same as that of Embodiment 2. Similar to Embodiment 3, the second joint member 312 is formed by joining a first half body 352 and a second half body 362 together, which are divided in the width direction. Also in the present embodiment, the first half body 352 and the second half body 362 are in such shapes that are obtained by dividing the second joint member 312 in half in the width direction along a parting line, which is the center line of a flat plate portion 312a in the width direction.

The second joint member 312 thus formed includes the flat plate portion 312a, a pair of protruding portions 252b and 262c, and a pair of turned portions 352d and 362e. The first half body 352 includes: a first flat plate half portion 352a, which forms a half of the flat plate portion 312a at one side in the width direction; the inner-side protruding portion 252b; and the inner-side turned portion 252d. The second half body 362 includes: a second flat plate half portion 362a, which forms a half of the flat plate portion 312a at the other side in the width direction; the outer-side protruding portion 262c; and the outer-side turned portion 362e.

Similar to Embodiment 3, after the first half body 352 is joined to the first joint member 111, at the time of combining the second half body 362 with the first joint member 111, the first flat plate half portion 352a is butted to the second flat plate half portion 362a in the width direction. In the state where the first flat plate half portion 352a and the second flat plate half portion 362a are butted together in the width direction, the tool is pushed against the parting line between the first half body 352 and the second half body 362 and moved along the parting line. As a result, the second half body 362 is friction stir welded to the first joint member 111 and the first half body 352 (see the FSW weld 121 that is formed in the central portion in the width direction). By joining the first flat plate half portion 352a and the second flat plate half portion 362a together, the flat plate portion 312a, a second joint surface 315 which is the lower surface of the flat plate portion 312a, and a welding surface 316 which is the upper surface of the flat plate portion 312a are formed. It should be noted that, also in the present embodiment, when seen in the normal direction to the second joint surface 315, the FSW weld 121 that is positioned in the middle between the outermost two FSW welds 121 is provided between the pair of fillet welds 23. Therefore, even though the first joint member 111 and the second joint member 312 are joined together such that their flat surfaces are butted together, high joining strength can be obtained.

In the present embodiment, the dimension of each of the turned portions 352d and 362e in the width direction is greater than the dimension of each of the turned portions in the width direction in Embodiment 3, and thereby the pair of turned portions 352d and 362e is disposed such that each of the turned portions 352d and 362e overlaps a respective one of the fillet welds 23 when seen in the normal direction to the second joint surface 315 (i.e., the vertical direction).

The pair of turned portions 352d and 362e includes upper surfaces 356 and 366. The first half body and the second half body are combined with the first joint member such that the upper surfaces 356 and 366 are in surface contact with the lower surface of the first joint member. Such a pair of turned portions 352d and 362e is friction stir welded to the first joint member 111. In the present embodiment, a pair of FSW welds 325 is formed such that the FSW welds 325 are provided in the inner-side and outer-side turned portions 352d and 362e, respectively. In order to form the inner-side FSW weld 325, first, the tool is pushed against the lower surface of the turned portion 352b until the tool reaches the lower surface 113 of the first joint member 111, and then the tool is moved in the longitudinal direction. In this manner, plastic flow of the first joint member 111 and the inner-side turned portion 352d is caused, and then the first joint member 111 and the inner-side turned portion 352d are joined together at the formed FSW weld 352. The same is true of the formation of the outer-side FSW weld 325. That is, plastic flow of the first joint member 111 and the outer-side turned portion 362e is caused, and then the first joint member 111 and the outer-side turned portion 362e are joined together at the formed FSW weld 352.

If the turned portions 352d and 362e are thus formed, similar to Embodiment 3, the strength of the dissimilar material joint 310 against vertical compressive and tensile loads exerted on the first joint member 111 and the second joint member 312 is improved. In the present embodiment, since the turned portions 352d and 362e are friction stir welded to the first joint member 111, the strength of the dissimilar material joint 310, in particular, the strength against shear loads in the width direction and the longitudinal direction can be further improved.

### [Embodiment 5]

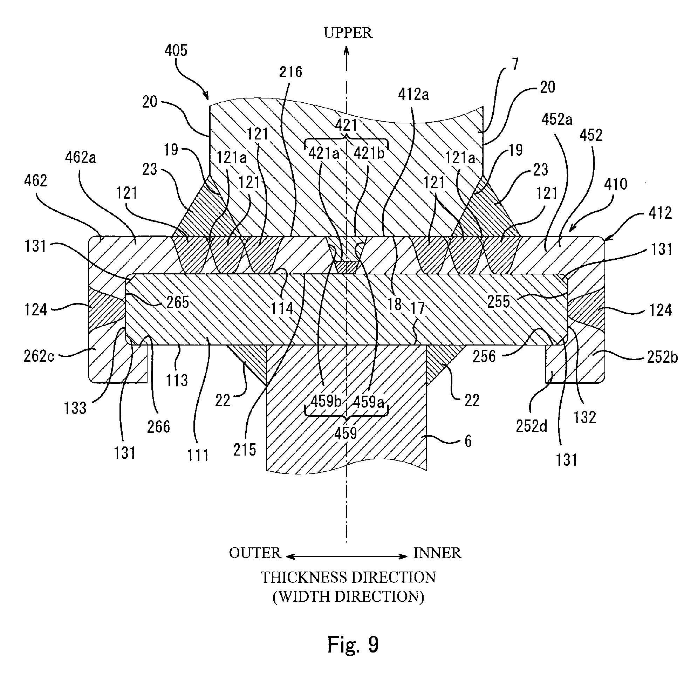

Fig. 9 is a sectional view of a dissimilar material joint 410 according to Embodiment 5 of the present invention. Embodiment 5 is different from Embodiment 3 in that, in Embodiment 5, the first half body and the second half body are joined together by arc welding. Hereinafter, a skirt 405 and the dissimilar material joint 410 according to Embodiment 5 are described with a focus on the differences of Embodiment 5 from the above-described embodiments. It should be noted that the skirt 405 and the dissimilar material joint 410 according to the present embodiment are also suitably applied to the LNG carrier shown in Fig. 1.

As shown in Fig. 9, the skirt 405 includes the hull-side member 6, the tank-side member 7, and the dissimilar material joint 410. The dissimilar material joint 410 includes: the first joint member 111 fillet welded to the hull-side member 6; and a second joint member 412 fillet welded to the tank-side member 7 and friction stir welded to the first joint member 111. The hull-side member 6 and the tank-side member 7 are the same as those of Embodiment 1. The first joint member 111 is the same as that of Embodiment 2. Similar to Embodiment 3, the second joint member 412 is formed by joining a first half body 452 and a second half body 462 together, which are divided in the width direction. Also in the present embodiment, the first half body 452 and the second half body 462 are in such shapes that are obtained by dividing the second joint member 412 in half in the width direction along a parting line, which is the center line of a flat plate portion 412a in the width direction.

The second joint member 312 includes the flat plate portion 412a, the pair of protruding portions 252b and 262c, and the pair of turned portions 252d and 262e. The first half body 452 includes: a first flat plate half portion 452a, which forms a half of the flat plate portion 412a at one side in the width direction; the inner-side protruding portion 252b; and the inner-side turned portion 452d. The second half body 462 includes: a second flat plate half portion 462a, which forms a half of the flat plate portion 412a at the other side in the width direction; the outer-side protruding portion 262c; and the outer-side turned portion 262e.

A groove 459a extending in the longitudinal direction is formed in the distal end of the first flat plate half portion 452a, and a groove 459b extending in the longitudinal direction is formed in the distal end of the second flat plate half portion 462a. The grooves 459a and 459b are open upward, and each groove is wider at their upper portion. A welding material is fed into the grooves 459a and 459b by arc welding, and thereby the first half body 452 and the second half body 462 are welded together, and also, the first half body 452 and the second half body 462 are joined to the first joint member 111.

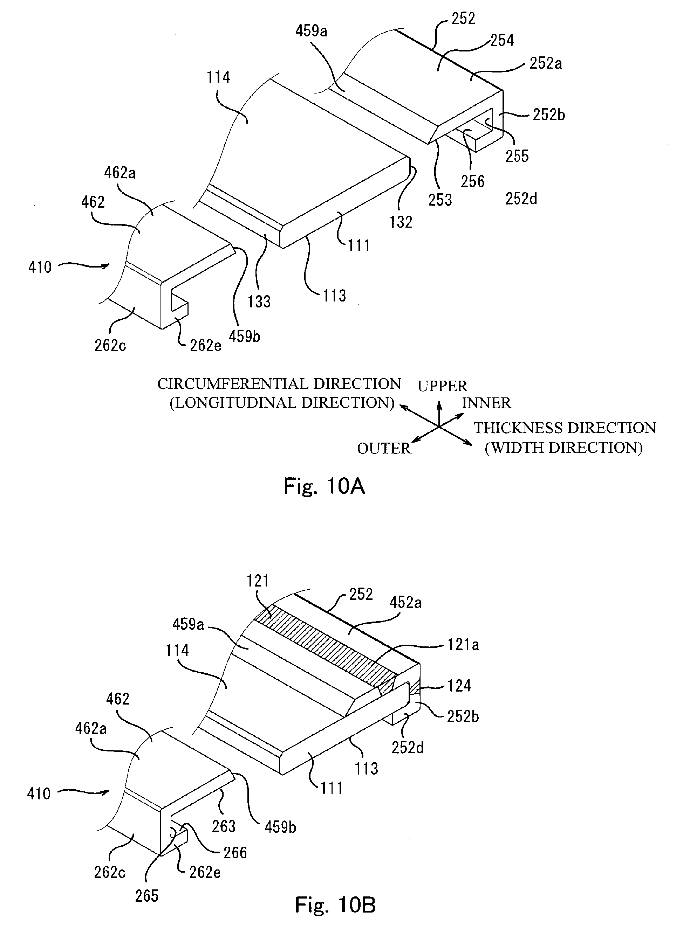

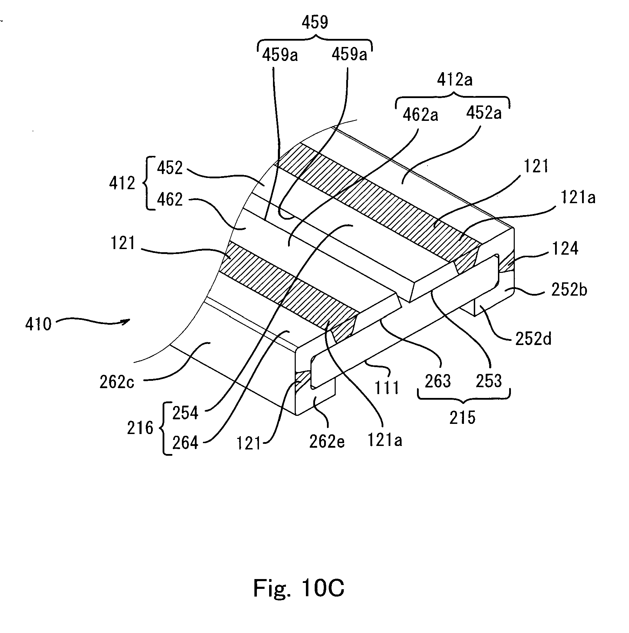

Fig. 10A is an exploded perspective view of the dissimilar material joint 410 shown in Fig. 9. Fig. 10B is a perspective view showing a state where the first half body 452 shown in Fig. 10A is joined to the first joint member 212. Fig. 10C is a perspective view showing a state where the second half body 462 shown in Fig. 10B is joined to the first joint member 212.

As shown in Figs. 10A and 10B, in the manufacturing of the dissimilar material joint 410, first, after the first half body 452 is combined with the first joint member 111 in a manner similar to Embodiment 3, the protruding portion 252b and the first flat plate half portion 452a are friction stir welded to the first joint member 111. Next, as shown in Figs. 10B and 10C, after the second half body 462 is combined with the first joint member 111 in a manner similar to Embodiment 3, the protruding portion 262c and the second flat plate half portion 462a are friction stir welded to the first joint member 111.

Previously in Embodiment 3, next, the friction stir welding tool is pushed against the boundary portion between the first flat plate half portion 252a and the second flat plate half portion 262a, and thereby the FSW weld 121 is formed along the parting line between the first half body 252 and the second half body 262 (see Fig. 6). However, in the present embodiment, a different joining method is adopted. As previously described, the groove 459a which is open upward is formed in the distal end of the first flat plate half portion 452a, and similarly, the groove 459b which is open upward is formed in the distal end of the second flat plate half portion 462a. Accordingly, in a state where the first half body 452 and the second half body 462 are friction stir welded to the first joint member 111, these grooves 459a and 459b face each other in the width direction. In this manner, a groove 459, which is open upward and which is V-shaped or U-shaped, is formed along the parting line between the first half body 452 and the second half body 462.

As shown in Fig. 9, after the groove 459 is formed, a welding material is fed into the groove 459 by arc welding. As a result, an arc weld 421 is formed in the dissimilar material joint 410 along the parting line between the first half body 452 and the second half body 462. By the arc welding, the first half body 452 and the second half body 462 are welded together. Moreover, by suitably selecting the welding material, the first half body 452 and the second half body 462 can be joined to the first joint member 111.

If the first half body 452 and the second half body 462 are each friction stir welded to the first joint member 111, then thermal contraction of the first half body 452 or the second half body 462 may cause the distal end of the first flat plate half portion 452a and the distal end of the second flat plate half portion 462a to be spaced apart from each other, and thus there is a risk of a gap being formed. By applying arc welding to join the half bodies 452 and 462 together, even if such thermal contraction occurs, the first half body 452 can be joined to the second half body 462 with no problem, so long as the amount of feeding of the welding material is suitably adjusted. Considering a load flow, the central portion in the width direction need not be as strong as the portions that overlap the fillet welds 23. Accordingly, even though friction stir welding is not applied to the central portion in the width direction, sufficient strength of the entire dissimilar material joint 410 can be obtained.

The first half body 452 and the second half body 462 are fabricated from the same kind of metal. Meanwhile, the metal from which the first half body 452 (as well as the second half body 462) is fabricated is dissimilar to the metal of the first joint member 111. Therefore, a multi-layer structure may be applied to the arc weld 421. For example, the arc weld 421 may include: a lower layer 421a formed by feeding a first welding material into the groove 459; and an upper layer 421b formed by feeding a second welding material different from the first welding material into the groove 459, the upper layer 421b being layered on the lower layer 421a. In this case, preferably, a welding material suitable for joining an aluminum alloy and steel together by arc welding is selected as the first welding material, and a welding material suitable for joining aluminum alloys together by arc welding is selected as the second welding material. This makes it possible to both keep the strength of the joint of the first half body 452 and the second half body 462 to the first joint member 111 and keep the strength of the joint between the half bodies 452 and 462.

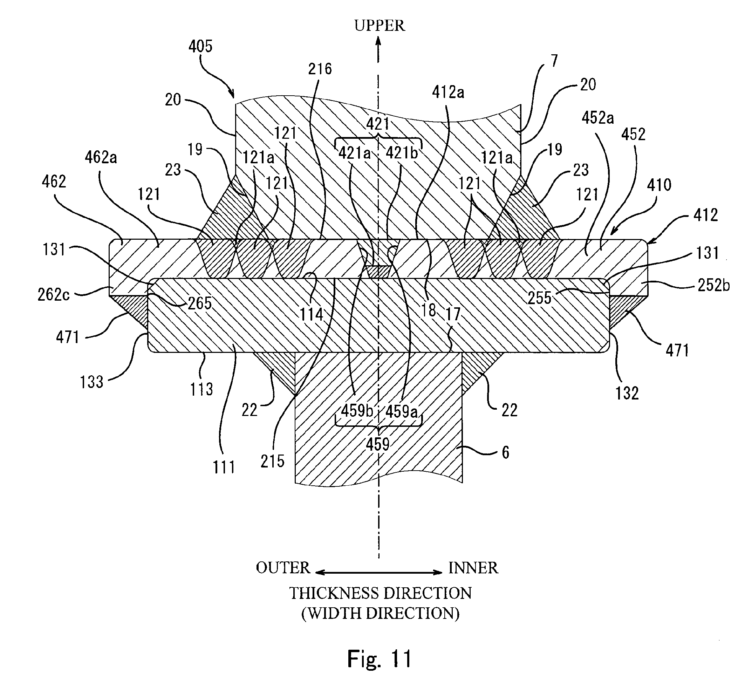

As shown in Fig. 11, end portions of the second joint member 412 may be arc welded to the first joint member 111, and thereby fillet welds 471 may be formed between the first joint member 111 and the end portions. In the example shown in Fig. 11, the second joint member 412 does not include a pair of turned portions, and end portions of the protruding portions 252b and 262c serve as the end portions of the second joint member 412. These end portions of the protruding portions 252b and 262c are arc welded to the respective side surfaces of the first joint member 111. As a result, the fillet welds 471 are formed between the end portions of the protruding portions 252b and 262c and the side surfaces 132 and 133 of the first joint member 111. In the case of including the turned portions as in Embodiments 3 to 5, end portions of the turned portions serve as the end portions of the second joint member. Accordingly, in this case, fillet welds are formed between the end portions of the turned portions and the lower surface of the first joint member. By joining the end portions of the second joint member to the surface(s) of the first joint member by arc welding as described above, the second joint member can be prevented from being bent away and separated from the first joint member, and thus the strength of the dissimilar material joint is improved.

### [Variations]

Although the embodiments of the present invention have been described above, the above-described configurations are non-limiting examples, and changes may be suitably made thereto within the scope of the present invention. For example, in applying the second joint member according to Embodiment 1, the pair of fillet welds may be disposed such that, as in Embodiments 2 to 4, when seen in the normal direction to the second joint surface, each fillet weld overlaps a respective continuous portion in which a plurality of FSW welds continuously overlap one another in the width direction. Conversely, in applying the second joint member according to any one of Embodiments 2 to 4, the positional relationship of the second joint surface with the pair of fillet welds and the FSW welds when seen in the normal direction to the second joint surface may be the same as that described in Embodiment 1.

A plurality of FSW welds arranged in the normal direction to the second joint surface may be formed in each protruding portion. A plurality of FSW welds arranged in the width direction may be formed in each turned portion.

The joining of the half bodies together by arc welding according to Embodiment 4 may be applied to the dissimilar material joint of Embodiment 4. The second joint member of the dissimilar material joint with no turned portions as described in Embodiment 2 may be constituted by the first half body and the second half body as described in Embodiments 3 to 5. The arrangement of the advancing side and the retreating side as described in Embodiment 1 may be similarly applied to Embodiments 2 to 5.

The tank support member is not limited to the one for supporting an independent-type spherical tank, but may be the one for supporting an independent-type cylindrical tank or an independent-type square tank. Moreover, the tank support member is not limited to the one for supporting a liquefied natural gas storage tank included in an LNG carrier, but may be the one for supporting, for example, a tank storing a different cargo such as liquefied petroleum gas. Since the temperature of liquefied natural gas needs to be kept extremely low, thermal deformation of a liquefied natural gas storage tank is significantly great and cannot be ignored when the strength of the dissimilar material joint is considered. The dissimilar material joints according to the embodiments of the present invention are such that stress concentration at the fillet welds is alleviated and the strength of each dissimilar material joint is improved as described above. Therefore, the dissimilar material joints according to the embodiments of the present invention are very useful when applied to not only LPG carriers for transporting liquefied petroleum gas but also LNG carriers.

The dissimilar material joint according to the present invention is also applicable to structure support members different from a tank support member. For example, in a case where the superstructure of a ship (e.g., a structure for forming a residential area) is fabricated from an aluminum alloy, the dissimilar material joint with the above-described configuration is suitably applicable to a support member that is interposed between the hull and the superstructure and that allows the superstructure to be supported on the hull, or suitably applicable to a portion that connects between the superstructure and the hull.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The structural and/or functional details may be substantially altered without departing from the spirit of the present invention.

### Industrial Applicability

The present invention makes it possible to readily manufacture a dissimilar material joint and provide a special functional advantage of being able to suppress the progression of fatigue of a fillet weld. The present invention is useful when applied to a dissimilar material joint of a structure support member for supporting a structure such as a tank fabricated from a metal dissimilar to that of a ship's hull.

### Reference Signs List

- 1: LNG carrier
- 2: hull
- 4: tank
- 5: tank support member (skirt)
- 6: hull-side member
- 7: tank-side member
- 10, 110, 210, 310, 410: dissimilar material joint
- 11, 111: first joint member
- 12, 112, 212, 312, 412: second joint member
- 14, 114: first joint surface
- 15, 115, 215, 315: second joint surface
- 16, 116, 216, 316: welding surface
- 19: groove
- 20: tank-side member's side surface
- 21, 121, 124, 325: FSW weld
- 23: fillet weld
- 252, 352, 452: first half body
- 262, 362, 462: second half body
- 112a, 212a, 312a, 412a: flat plate portion
- 152b, 152c, 252b, 262c, 352b, 362c: protruding portion
- 252d, 262e, 362d, 362e: turned portion
- 421,471: arc weld

## Claims

1. A dissimilar material joint applied to a structure support member interposed between a hull and a structure, the structure being fabricated from a metal dissimilar to a metal of the hull, the structure support member supporting the structure,
the dissimilar material joint comprising:
a first joint member fabricated from a same kind of metal as the metal of the hull and joined to a hull-side member of the structure support member; and
a second joint member fabricated from a same kind of metal as the metal of the structure, the second joint member being fillet welded to a structure-side member of the structure support member and friction stir welded to the first joint member, wherein
the first joint member includes a first joint surface opposite to the hull-side member, and the second joint member includes a welding surface fillet welded to the structure-side member and a second joint surface opposite to the welding surface,
the first joint surface and the second joint surface are formed as substantially flat surfaces and are in surface contact with each other,
the first joint member and the second joint member are joined together at a plurality of friction stir welds, the friction stir welds being arranged in a width direction and extending in a longitudinal direction,
a pair of fillet welds is formed in side surfaces of the structure-side member, the fillet welds reaching the welding surface, and
the pair of fillet welds is disposed such that each fillet weld overlaps at least one of the plurality of friction stir welds when seen in a normal direction to the second joint surface.

2. The dissimilar material joint according to claim 1, wherein one or more friction stir welds among the plurality of friction stir welds, the one or more friction stir welds being positioned between outermost friction stir welds of the plurality of friction stir welds, are disposed between the pair of fillet welds when seen in the normal direction.

3. The dissimilar material joint according to claim 1 or 2, wherein
at least two friction stir welds among the plurality of friction stir welds form a continuous portion, in which the at least two friction stir welds are continuous with each other in the width direction, and
each of the pair of fillet welds is disposed to overlap the continuous portion when seen in the normal direction.

4. The dissimilar material joint according to any one of claims 1 to 3, wherein
the structure-side member has a pair of grooves formed in the respective side surfaces of the structure-side member,
the fillet welds are formed in the grooves, respectively, and
the side surfaces of the structure-side member are disposed such that each of the side surfaces overlaps one of the plurality of friction stir welds when seen in the normal direction.

5. The dissimilar material joint according to any one of claims 1 to 4, wherein
the second joint member includes:
a flat plate portion including the first joint surface and the welding surface; and
a pair of protruding portions protruding from both ends of the flat plate portion in the width direction, such that the protruding portions cover both side surfaces of the first joint member, respectively, and
the flat plate portion is joined to the first joint member at the plurality of friction stir welds.

6. The dissimilar material joint according to claim 5, wherein the protruding portions are friction stir welded to the first joint member.

7. The dissimilar material joint according to claim 5 or 6, wherein the second joint member includes a pair of turned portions protruding from distal ends of the pair of protruding portions, such that the turned portions cover a surface of the first joint member, the surface being an opposite surface to the first joint surface.

8. The dissimilar material joint according to claim 7, wherein the turned portions are friction stir welded to the first joint member.

9. The dissimilar material joint according to any one of claims 5 to 8, wherein the second joint member includes a first half body and a second half body divided in the width direction, the first half body and the second half body being joined together to form the second joint member.

10. The dissimilar material joint according to claim 9, wherein the first half body and the second half body are joined together by friction stir welding.

11. The dissimilar material joint according to claim 9, wherein the first half body and the second half body are joined together by arc welding.

12. The dissimilar material joint according to any one of claims 1 to 11, wherein one side of each friction stir weld, the one side being closer to a center of the first joint surface in the width direction than an opposite side of the friction stir weld, is an advancing side, and the opposite side is a retreating side.

13. A structure support member interposed between a hull and a structure, the structure being fabricated from a metal dissimilar to a metal of the hull, the structure support member supporting the structure,
the structure support member comprising:
a hull-side member fabricated from a same kind of metal as the metal of the hull and fixed to the hull;
a structure-side member fabricated from a same kind of metal as the metal of the structure and fixed to the structure; and
a dissimilar material joint, wherein
the dissimilar material joint includes:
a first joint member fabricated from the same kind of metal as the metal of the hull and joined to the hull-side member of the structure support member; and
a second joint member fabricated from the same kind of metal as the metal of the structure, the second joint member being fillet welded to the structure-side member of the structure support member and friction stir welded to the first joint member,
the first joint member includes a first joint surface opposite to the hull-side member, and the second joint member includes a welding surface fillet welded to the structure-side member and a second joint surface opposite to the welding surface,
the first joint surface and the second joint surface are formed as substantially flat surfaces and are in surface contact with each other,
the first joint member and the second joint member are joined together at a plurality of friction stir welds, the friction stir welds being arranged in a width direction and extending in a longitudinal direction,
a pair of fillet welds is formed in side surfaces of the structure-side member, the fillet welds reaching the welding surface, and
the pair of fillet welds is disposed such that each fillet weld overlaps at least one of the plurality of friction stir welds when seen in a normal direction to the second joint surface.

14. An LNG carrier comprising:
a hull;
a tank fabricated from a metal dissimilar to a metal of the hull; and
a tank support member interposed between the hull and the tank, the tank support member supporting the tank, wherein
the tank support member includes:
a hull-side member fabricated from a same kind of metal as the metal of the hull and fixed to the hull;
a tank-side member fabricated from a same kind of metal as the metal of the tank and fixed to the tank; and
a dissimilar material joint,
the dissimilar material joint includes:
a first joint member fabricated from the same kind of metal as the metal of the hull and joined to the hull-side member of the tank support member; and
a second joint member fabricated from the same kind of metal as the metal of the tank, the second joint member being fillet welded to the tank-side member of the tank support member and friction stir welded to the first joint member,
the first joint member includes a first joint surface opposite to the hull-side member, and the second joint member includes a welding surface fillet welded to the tank-side member and a second joint surface opposite to the welding surface,
the first joint surface and the second joint surface are formed as substantially flat surfaces and are in surface contact with each other,
the first joint member and the second joint member are joined together at a plurality of friction stir welds, the friction stir welds being arranged in a width direction and extending in a longitudinal direction,
a pair of fillet welds is formed in side surfaces of the tank-side member, the fillet welds reaching the welding surface, and
the pair of fillet welds is disposed such that each fillet weld overlaps at least one of the plurality of friction stir welds when seen in a normal direction to the second joint surface.

15. A method of manufacturing a dissimilar material joint applied to a structure support member interposed between a hull and a structure, the structure being fabricated from a metal dissimilar to a metal of the hull, the structure support member supporting the structure,
the method comprising:
a first joint member fabricating step of fabricating a first joint member from a same kind of metal as the metal of the hull, the first joint member including a substantially flat first joint surface;
a second joint member fabricating step of fabricating a second joint member from a same kind of metal as the metal of the structure, the second joint member including a substantially flat second joint surface and a welding surface opposite to the second joint surface;
a friction stir welding step of friction stir welding the first joint member and the second joint member together at a plurality of friction stir welds which are arranged in a width direction and which extend in a longitudinal direction, the plurality of friction stir welds being formed by performing an operation a plurality of times at different respective positions in the width direction, the operation including, in a state where the first joint surface and the second joint surface are in surface contact with each other, pushing a tool against the welding surface until the tool reaches the first joint surface and then moving the tool in the longitudinal direction while keeping the tool rotating; and
a fillet welding step of fillet welding the structure-side member to the second joint member such that a pair of fillet welds, which is formed in side surfaces of the structure-side member of the structure support member and which reaches the welding surface, is disposed to overlap at least one of the plurality of friction stir welds.

16. The method of manufacturing a dissimilar material joint according to claim 15, wherein
the second joint member fabricating step includes fabricating a first half body and a second half body, which are half bodies of the second joint member divided in the width direction, the first half body and the second half body each including:
a flat plate half portion including a half of the second joint surface and a half of the welding surface at one side in the width direction; and
a protruding portion protruding from an end of the flat plate half portion, and
the friction stir welding step includes:
a first combining step of combining the first half body with the first joint member, by moving the first half body in the width direction relative to the first joint member to cover the first joint surface with the flat plate half portion of the first half body in such a manner as to cover a side surface of the first joint member with the protruding portion;
a first friction stir welding step of friction stir welding the first joint member and the first half body together at a plurality of friction stir welds which are arranged in the width direction and which extend in the longitudinal direction, the plurality of friction stir welds being formed by pushing a tool against the welding surface of the first half body until the tool reaches the first joint surface and then moving the tool in the longitudinal direction while keeping the tool rotating;
a second combining step of combining the second half body with the first joint member, by moving the second half body in the width direction relative to the first joint member to cover the first joint surface with the flat plate half portion of the second half body in such a manner as to cover a side surface of the first joint member with the protruding portion;
a second friction stir welding step of friction stir welding the first joint member and the second half body together at a plurality of friction stir welds which are arranged in the width direction and which extend in the longitudinal direction, the plurality of friction stir welds being formed by pushing the tool against the welding surface of the first half body until the tool reaches the first joint surface and then moving the tool in the longitudinal direction while keeping the tool rotating; and
a half body joining step of joining the first half body and the second half body together along a parting line between the first half body and the second half body.

17. The method of manufacturing a dissimilar material joint according to claim 16, wherein
the half body joining step includes moving the tool along the parting line between the first half body and the second half body, such that the second half body is friction stir welded to the first joint member and integrated with the first half body.
